# EUROPEAN PATENT SPECIFICATION

(11) **EP 2 011 992 B1**
(45) Date of publication and mention of the grant of the patent: **19.11.2014**
(21) Application number: 08159686.8
(22) Date of filing: 04.07.2008
(51) Int. Cl.: F02M 35/024, F02M 35/10, B01D 46/52, B23D 45/16

(54) **Power cutter**
Trennschleifer
Découpeuse

(30) Priority: 04.07.2007 GB 0712924; 18.03.2008 GB 0804966
(43) Date of publication of application: 07.01.2009
(73) Proprietor: Black & Decker, Inc., Newark, DE 19711 (US)
(72) Inventor: Grossman, Horst, 65597, Hünfelden (DE); Sell, Stefan, D-55129, Mainz (DE); Soika, Martin, 65510, Idstein (DE)
(74) Representative: Bell, Ian Stephen

(56) References cited:
- WO-A1-2005/056225
- DE-A1- 4 401 186
- GB-A- 2 420 727
- JP-A- 57 144 017

## Description

The present invention relates to a power cutter.

A typical power cutter comprises a housing in which is mounted a two stroke internal combustion engine. Attached to the side of the housing is a support arm which extends forward of the housing. Rotatably mounted on the end of the support arm is a cutting blade, usually in the form of a grinding disk. The motor is drivingly connected to the cutting blade via a drive belt. The rotary output of the engine rotatingly drives the cutting blade via the drive belt. The drive belt is driven via a centrifugal clutch which enables the out drive spindle of the engine to disengage from the belt when the engine is running at a slow speed, to allow the engine to continue running, whilst disengaging any drive to the cutting blade to allow the blade to be stationary.

Also mounted in the housing is a petrol tank which provides petrol for the engine and an oil tank, which provides lubricating oil to mix with the petrol, to lubricate the engine, to provide a petrol/oil mixture. The petrol and oil mixture is fed into the engine via a carburetor, also mounted within the housing, which creates an aerated petrol/oil mixture, to power the engine.

Mounted on the rear of the housing is a rear handle for supporting the power cutter, which contains a trigger switch for accelerating the engine upon depressing. Depression of the trigger switch causes more of the aerated petrol/oil mixture to be injected into the engine from the carburetor which in turn causes the speed of the engine to accelerate.

GB2232913, WO2005/056225 and US5177871 show such power cutters.

One problem associated with power cutters is the amount of dust generated during the operation of the power cutter and which surrounds the power cutter. The carburetor of the power cutter requires a clean air supply which is to be mixed with the petrol/oil mixture prior to being injected into the engine. It is important that the air is clean as dust laden air would block up the carburetor and damage the engine. As such, as with any internal combustion engine, the air entering the carburetor needs to be filtered. However, the carburetor is only able to draw air from the immediate vicinity of the power cutter, which is laden with the large amounts of dust generated by the action of the power cutter. Further more, such dust is typically very fine and as such is difficult to filter. This has resulted in the requirement for effective filter mechanisms to be used to clean air for the carburetor of power cutters. Simple filters soon block up due to the volume of dust generated. Such filters are often difficult to clean, usually due to their construction and the fineness of the dust. Alternatively, complicated filter mechanisms, often using centrifugal filter techniques, are used.

The present invention is intended to provide a simple construction of filter which is easy to clean.

According to the present invention, there is provided a power cutter comprising:
a housing;
an engine mounted within the housing;
a support arm mounted on the housing and which projects forward of the housing;
a blade mounting mechanism rotatably mounted on the end of the support arm and which is capable of being rotationally driven by the engine when the engine is running;
a liquid fuel aeration mechanism to generate aerated fuel for the engine;
an air intake for the provision of air for the liquid fuel aeration device;
an air filtration mechanism to filter the air drawn in from the air intake for the liquid fuel aeration mechanism;
a fuel tank for providing fuel to the liquid fuel aeration mechanism; and
an exhaust through which the exhaust gases generated by the operation of the engine are expelled;
wherein the air filtration mechanism comprises an air filter comprising a plurality of pleats and wherein the air filtration mechanism further comprises an air filter cleaning mechanism.

The pleats may hang substantially vertically downwardly when the power cutter is in its standard orientation.

The air filter cleaning mechanism may comprise a moveable pleat stroker located adjacent the air filter and which is capable of being moved over the pleats of the air filter, and which, when moved over the pleats, engages with the pleats and causes the pleats to flex in order to knock dust trapped on the pleats, off the pleats.

The pleat stroker may knock dust into the space below the air filter.

The pleat stroker may be a rubber flap.

The pleat stroker may comprise at least one first brush.

The pleats may be substantially straight and parallel to each other, and the pleat stroker may move in a direction which is parallel to the lower edges of the pleats.

When the pleats are substantially straight and parallel to each other, the pleat stroker may move in a direction which is perpendicular to the lower edges of the pleats.

The filtration mechanism may further comprise a moveable frame upon which the pleat stroker is mounted and which also comprises a handle, capable of being grasped by the operator, and which, when moved by the operator, causes the movement of the pleat stroker.

The frame may slide linearly within the housing.

There may be further provided at least one second brush mounted on the frame which sweeps up dust knocked off the pleats of the air filter in the space below the air filter.

There may be formed at least one first aperture in the side of the housing through which at least one said second brush sweeps dust from the space to the outside of the housing.

The handle may seal at least one said first aperture when the frame is in a first position.

The handle may expose at least one said first aperture when moved by an operator from the first position, the movement causing at least one said second brush to sweep dust through the exposed aperture.

There may be provided biasing means to bias the frame to its first position.

The biasing means may comprise at least one elastomeric rod.

A first end of at least one said elastomeric rod may be adapted to slide into a slot, and a second end of the or each said rod may be adapted to be mounted to said handle.

A respective first end of at least one said elastomeric rod may have a different shape from the second end of said elastomeric rod.

The frame may comprise a tray underneath the pleat stroker to catch the dust.

The tray may be removeable.

The power cutter may further comprise a fixed frame to which said moveable frame is mounted, wherein the fixed frame comprises:
a first surface for engaging at least one said second brush;
a second surface located below the first surface when the power cutter is in its standard orientation;
at least one said first aperture; and
at least one said second aperture in said first surface;
wherein movement of at least one said second brush away from said first position moves dust along said first surface towards at least one said first aperture, and movement of at least one said second brush towards said first position moves dust along said first surface towards at least one said second aperture to cause dirt to fall through at least one said second aperture onto said second surface.

Said second surface may be inclined relative to the horizontal when the power cutter is in its standard orientation.

The power cutter may further comprise a track mounted to a plurality of said pleats and adapted to be engaged by said pleat stroker to knock dust off the pleats.

The liquid fuel aeration mechanism may be a carburetor.

The aerated fuel may comprise petrol.

The aerated fuel may further comprise lubricating oil.

The air filter may be located above the liquid fuel aeration device when the power cutter is in its standard orientation.

The air filtration mechanism may be arranged so that air is drawn from the air intake to a space below the air filter, and passes through the filter to a space above the air filter prior to being directed to the liquid fuel aeration mechanism.

The pleats may be substantially straight and parallel to each other.

The air filtration mechanism may comprise a vibration device to shake the air filter.

The vibration device may be driven by the pulling of the starter cord of the engine.

The vibration device may comprise an eccentric or cam mechanism connected to the air filter on a first side, the air filter being pivotable mounted on a second side, rotation of the eccentric causing the air filter to vibrate.

The vibration device may comprise an actuator member pivotably attached to said housing and biased towards said housing by second biasing means so as to cause said actuator member to strike the housing and agitate the filter.

The air filter may be movably mounted in the housing and the vibration device may be adapted to move the air filter relative to the housing.

The vibration device may comprise at least one first ratchet plate moveably mounted to the housing for engaging a respective second ratchet plate on the air filtration mechanism to cause the air filter to move relative to the housing.

The power cutter may further comprise at least one air inlet oriented such that dust knocked off the air filter falls under gravity out of at least one said air inlet when the power cutter is in use.

The air filter may comprise a filter housing and a cover, wherein the cover is adapted to be mounted to the filter housing by means of at least one clip to seal the cover to the filter housing.

The liquid fuel aeration mechanism may be located below the air filter when the power cutter is in its standard orientation, and is connected to an outlet of the air filter by means of at least one conduit.

The engine can be any type of internal combustion engine such as a four stroke, rotary or wankel engine, though typically they are two stroke engines. Furthermore, such an engine can run on a range of different types of fuel such as diesel, petrol or alcohol.

Embodiments of the invention will now be described with reference to accompanying drawings of which:
Figure 1 shows a perspective view of the power cutter from a first side;
Figure 2 shows a side view of the power cutter from a second side;
Figure 3 shows a sketch of a horizontal cross section of the belt drive and support arm;
Figure 4 shows a sketch of the forward and rearward sections of the support arm;
Figure 5 shows a sketch of a horizontal cross sectional view of the connection between the rearward and forward sections of the support arm;
Figure 6 shows the belt tensioner;
Figure 7 shows a computerized drawing of the forward section, driven wheel, blade and blade guard;

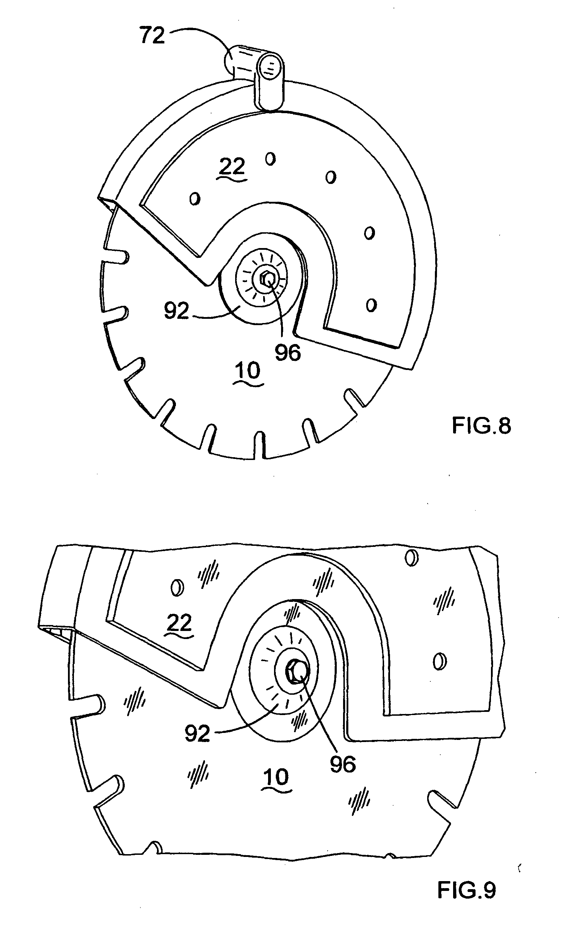

Figure 8 shows a computerized drawing of the blade and blade guard from the opposite direction to that shown in Figure 7;
Figure 9 shows a computerized drawing of a close up the blade and blade guard;
Figure 10 shows a computerized drawing of a close up the blade and blade guard without the holding nut;
Figure 11 shows a computerized drawing of a close up the blade and blade guard without the first support disk;
Figure 12 shows a computerized drawing of forward support with the blade guard;
Figure 13 shows a computerized drawing of a cut away view of the rotary support mechanism from the side with the adapter in the first position;
Figures 14 and 15 show computerized drawings of a cut away views of the rotary support mechanism from the side with the adapter in the second position;
Figure 16 shows a cut away view of the blade support;
Figure 17 shows a computerized drawing of a cut away view of the rotary support mechanism from a first perspective;
Figure 18 shows a computerized drawing of a cut away view of the rotary support mechanism from a second perspective;
Figure 19 shows a sketch of the vertical cross section of the body of a power cutter when the power cutter is in its standard orientation;
Figure 20 shows a perspective view of the fuel cap;
Figure 21 shows an exploded view of the fuel cap from a first side;
Figure 22 shows an exploded view from a second side;
Figure 23 shows a sketch of a vertical cross section of the part of the power cutter with the air filter when the power cutter is in its standard orientation;
Figure 24 shows a computer generated drawing of the filter;
Figures 25 and 26 show sketches of the cleaning action of the filter;
Figures 27 to 29 show more computer generated drawings of the filter;
Figure 30 shows a second embodiment of an air filtration system;
Figure 31 is a perspective view of an air filter of a third embodiment of an air filtration system;
Figure 32 is a side view of the air filter of Figure 31 and the pleat stroker;
Figure 33 is a perspective view of the power cutter having a fourth embodiment of an air filtration system and a carburetor;
Figure 34 is a side view of the part of the power cutter shown in Figure 33;
Figure 35 is a perspective view of a middle part of a filter housing of the air filtration mechanism of Figure 34 showing the pleat stroker and a brush;
Figure 36 is a perspective view of a lower part of a filter housing of the air filtration mechanism of Figure 34;
Figure 37 shows the middle part of the filter housing of Figure 35 with resilient rods in place;
Figure 38 shows a detailed view of part of the middle part of the housing of Figure 37 with threaded tubes mounted to the ends of the flexible rods;
Figure 39 is a view of the housing part of Figure 37 with covers mounted to the threaded tubes to enclose the end stops of the flexible rods;
Figure 40 is a perspective view of the middle housing part of Figure 35, with the brush and pleat stroker removed, mounted to the lower housing part of Figure 36;
Figure 40A is a schematic side view of the arrangement of Figure 40 with the brush in place showing operation of the brush;
Figure 41 is a view corresponding to Figure 40 with the brush, pleat stroker, flexible rods and covers in place;
Figure 42 is a perspective view of an upper part of the filter housing of the air filtration mechanism shown in Figure 34;
Figure 43 is a perspective view of the upper housing part of Figure 42 mounted to the middle and lower housing parts of Figure 40;
Figure 44 is a schematic view of the air filtration mechanism of Figure 33 with the filter cover removed;
Figure 45 is a perspective view of the air filtration mechanism of Figure 44 viewed from a different direction;
Figure 46 is a perspective view of the air filtration mechanism of Figure 33 with the filter cover and outlet pipe in place;
Figure 47 is a detailed view of part of the air filtration mechanism shown in Figure 46;
Figure 48 is a side view of an air filtration mechanism of a fifth embodiment of the invention with an actuator in a closed position;
Figure 49 is a perspective view of the parts shown in Figure 48 with the actuator in an open position;
Figures 50 and 51 are perspective views of part of the housing of the power cutter of Figure 49 with a cover of the housing removed;
Figure 52 is a view of part of the housing of Figure 50 with the air filtration mechanism removed to show the carburetor and the clean air inlet to the carburetor;
Figure 53 is a perspective view of the air filtration mechanism of Figure 50;
Figure 54 is a perspective view of the air filtration mechanism of Figure 50, viewed from a different direction and with the clips of the filter housing cover in the unlocked position;
Figure 55 is a view from below of the air filtration mechanism of Figure 54;
Figure 56 is a perspective view of the air filtration mechanism of Figure 53 with the filter cover removed;
Figure 57 is a cross sectional view of the air filtration mechanism of Figure 53;
Figure 58 is a cross sectional view of the arrangement of Figure 57 viewed from a different direction;
Figure 59 is a perspective view of part of the housing of a power cutter having an air filtration mechanism of a sixth embodiment of the present invention;
Figure 60 is an exploded perspective view of part of a filter cleaning mechanism of the air filtration mechanism of Figure 59;
Figure 61 is a top view of the air filtration mechanism of Figure 59 with a cover of the housing removed;
Figure 62 is a top view of the mechanism of Figure 61 with the air filter removed;
Figure 63 is a perspective view from above of part of the arrangement of Figure 62 with the filter housing and support member removed;
Figure 64 is a view corresponding to Figure 63 with the support member in place;
Figure 65 is a perspective view of the air filtration mechanism of Figure 59;
Figure 66 is a perspective view of the support member of Figure 64;
Figure 67 is a perspective view of a first part of a filter cleaning mechanism of the air filtration mechanism of Figure 65;
Figure 68 is a perspective view of a second part of the filter cleaning mechanism of Figure 65;
Figure 69 is a perspective view of the support member and filter housing of Figure 65 with the cover removed and viewed from a different direction;
Figure 70 shows an actuator of the filter cleaning mechanism of Figure 69;
Figure 71 is a perspective view of the air filtration mechanism of Figure 65 viewed from a different direction;
Figure 72 is a perspective view of part of the filter housing and suction pipe of Figure 71 with the cover of the filter housing removed;
Figure 73 is a perspective view from below of the filter housing and suction pipe of Figure 71 with the carburetor inlet manifold removed;
Figure 74 is a perspective view of the filter housing of Figure 71 with the cover, suction pipe and inlet manifold removed; and
Figure 75 is a perspective view of the suction pipe of Figure 73.

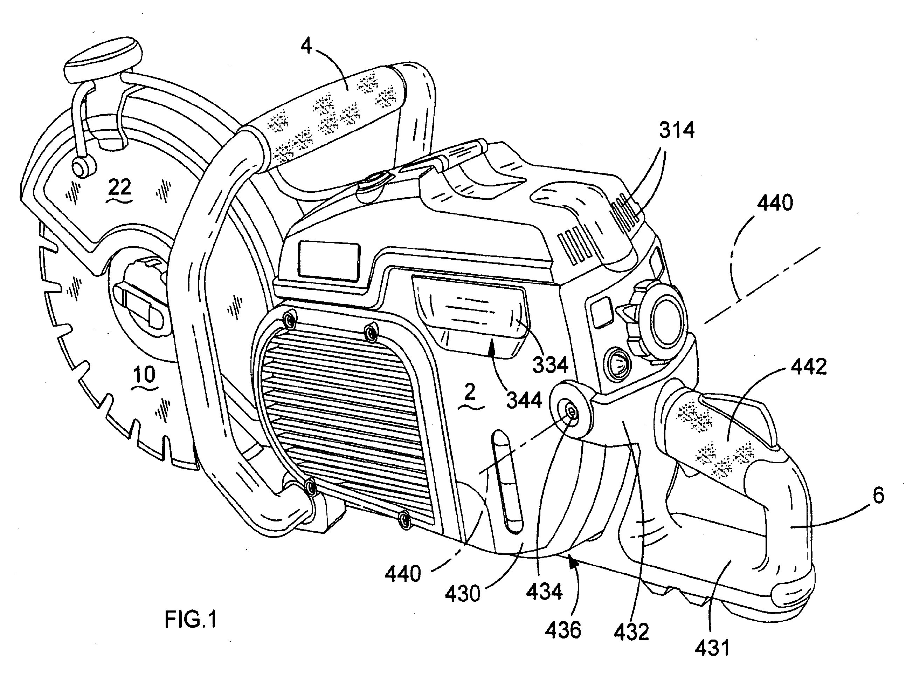

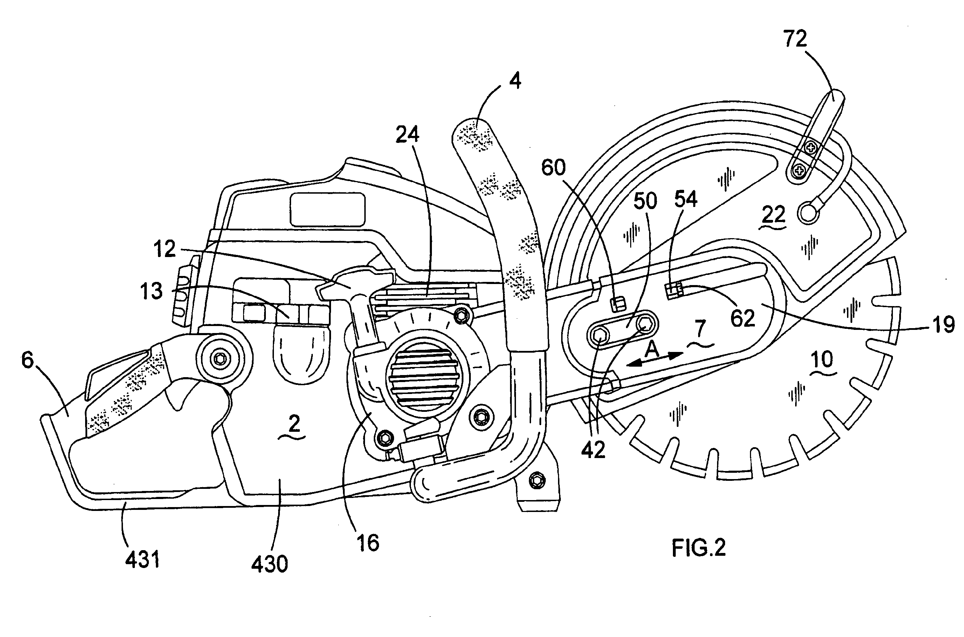

Referring to Figures 1 and 2, the power cutter comprises a body 2 in which is mounted a two stroke internal combustion engine 24, a front handle 4, a rear handle 6, a support arm 7, a cutting blade 10, rotatably mounted on the support arm 7 and driven by the engine 24 via a rubber belt 26 and a blade guard 22. A starter 12 is provided to activate the engine 24. A plastic cover 19 covers the out side of the support arm 7 as shown in Figure 2. The power cutter is its standard orientation when it is located on a horizontal surface as shown in Figure 1.

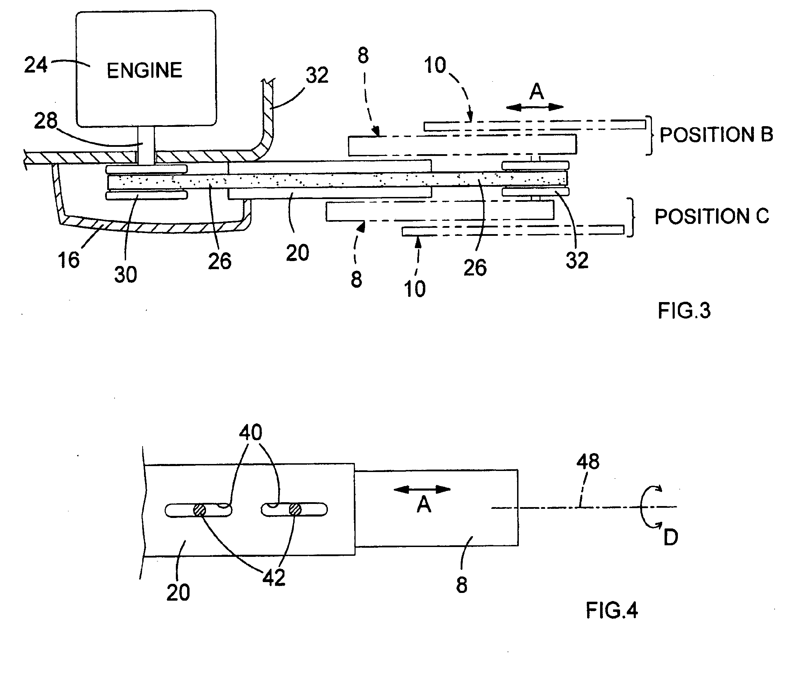

Referring to Figure 3, the support arm 7 comprises two sections, a forward section 8 and a rearward section 20. The rearward section 20 is made from cast iron and is rigidly attached to the side of the gear housing 32 using bolts (not shown). The forward section 8 is made of cast iron and is slideably mounted on the rearward section 20. The forward section can slide in the direction of Arrow A. The method by which the forward section 8 is slideably mounted on the rearward section 20 is described in more detail below.

The engine 24 has an output shaft 28 on which is mounted a drive wheel 30 for the rubber belt 26. The output shaft drives the drive wheel 30 via a centrifugal clutch (not shown) in well known manner. A driven wheel 32 is rotatably mounted on the end of the forward section 8 of the support arm. The driven wheel 32 is connected to the cutting blade 10 which is also mounted on the forward section 8 as described below. The belt 26 passes around the rearward section 20, between the two wheels 30, 32 to transmit the rotation of the engine to the cutting blade 10. The purpose of enabling the forward section 8 to slide in relation to the rearward section 20 is to enable the belt 26 to be tensioned as described below. A hub 16 covers the drive wheel 30.

The Interconnection between rearward and forward sections of the support arm 7 will now be described with reference to Figures 3, 4, 5 and 6.

Referring to Figures 3 and 4, the rearward section 20 comprises two elongate slots 40 formed through the width of the rearward section 20. The elongate slots 40 are aligned with each other, are of equal length and run lengthways along rearward section 20 of the support arm. Formed through the forward section 8 are two corresponding holes 46. The part of the forward section 8 with the holes 46 is located alongside of the part of the rear section 20 with the elongate slots 40 so that the holes 46 align with a corresponding slot 40. A bolt 42 passes through each hole 46 and corresponding slot 40. A nut 44 is screwed onto the bolt 42 to sandwich the rearward and forward sections together and hold them in place using friction. The slots 40 enable the bolts 42, and hence the forward section 8, to slide relative to the rearward section 20.

In order to slide the rearward section 20 relative to the forward section 8, the nuts 44 are slackened so that the two can move relative to each other. The forward section 8 is then slid (using the belt tensioner described below) to the desired position, and then the nuts 44 are tightened to sandwich the rearward section 20 to the forward section 8 to prevent movement between the two.

The forward and rearward interconnection mechanism is designed so that the forward section 8 can be located on either side of the rearward section 20 as shown in Figure 2. In normal operation, the forward section 8 is located on the same side of the rearward section 20 as the engine 24. This is indicated as position B. In this position, the cutting blade 10 is located closer to the central axis of the power cutter. However, it is sometimes desirable to have the cutting blade located towards the edge of the body 2 to enable it to cut near to a wall. The forward section 8 can then be moved to the other side of the rearward section 20 and be rotated through 180 degrees about the longitudinal axis 48 of the forward section 8 as indicated by Arrow D to the position C. In both orientations, the driven wheel 32 locates in the same position so that it can be driven by the belt 26.

### The belt tensioner will now be described with reference to Figures 4, 5 and 6

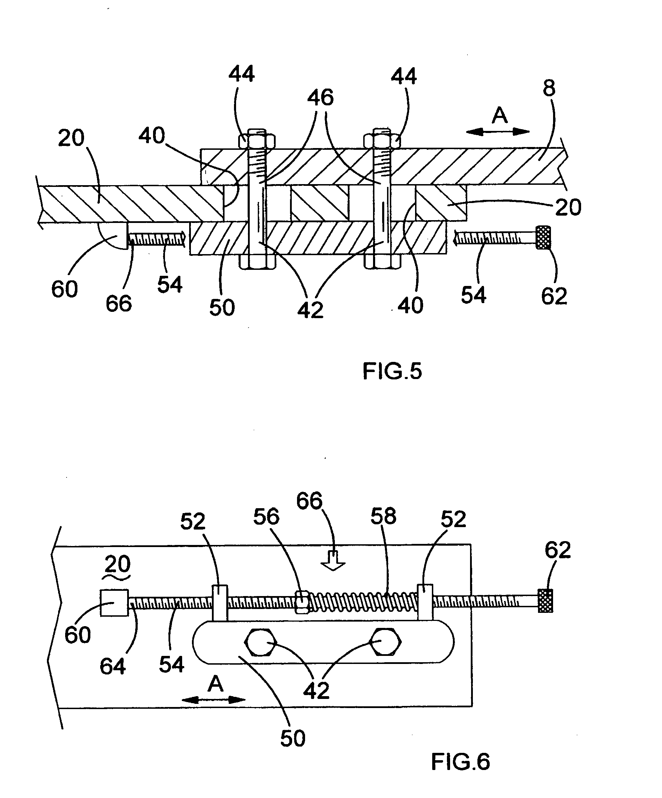

Referring to Figures 5 and 6, the belt tensioner comprises a metal plate 50 having two holes 46 through which the bolts 42 pass as seen in Figure 4. The position of the plate 50 is fixed by the position of the bolts 42. Formed on the metal plate 50 are two hoops 52 which form apertures which are aligned. The shaft of an elongate bolt 54 passes through the hoops 52. The elongate bolt 54 can freely rotate and axially slide within the hoops 52. Threadedly mounted onto the bolt 54 is a nut 56. A spring 58 is sandwiched between the nut 56 and one of the hoops 52. The spring 58 prevents the nut from rotating. Therefore, as the bolt 54 is rotated, the nut 56 travels along the length of the bolt 54 in a direction dependent on the direction of rotation of the bolt 54. The position of the nut 56 is fixed relative to the hoop 52 by the spring 58. A stop 60 is integrally formed on the rearward section 20 of the supporting arm.

In order to tension the belt 26, the elongate bolt is rotated so that the nut moves towards the head 62 of the bolt 54. As its position is fixed by the spring 58, the nut remains stationary relative to the hoop 52 causing the bolt 54 to axially move within the hoops 52 so that the end 64 of the bolt 54 approaches the stop 60. Upon engagement of the stop 60, the end 64 and hence the bolt 54, can not move further and therefore the nut begins to move. The movement of the nut causes the spring 58 and hence the hoop 52 to move towards the head 62 of the elongate bolt 54. This in turn results in the plate 50, the two bolts 42 and the forward section 8 to move with the nut 56, the bolts 42 sliding within the two slots 40. However, when the belt 26 becomes tight, the forward section 8, and hence the bolts 42 and plate 50 are prevented from moving further. However, if the elongate nut 54 is further rotated, the nut 56 will continue to travel along its length. Therefore, the spring 58 becomes compressed, applying a force onto the hoop, and hence plate 50, which in turn transfers it to the forward section 8. This tensions the belt 26. The more compression of the spring 58, the more force is applied to the belt 26. An indicator 66 is added to the plate 50 to show when the amount of the compression of the spring 58 is sufficient to apply the correct amount of force to the belt 26.

The blade mount on the forward section 8 will now be described.

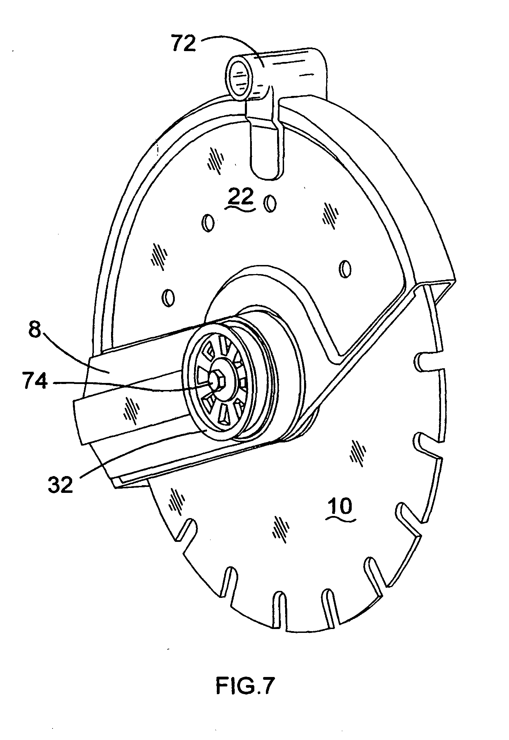

Referring to Figure 7, the driven wheel 32 is rotatably mounted on the forward section 8. The driven wheel 32 is drivingly connected to the cutting blade 10 via a spindle 70 as will be described in more detail below. The blade guard 22 is pivotally mounted around the spindle 70 as will be described in more detail below. A grasp 72 is rigidly attached to the blade guard 22 which can held by an operator in order to pivot the blade guard 22.

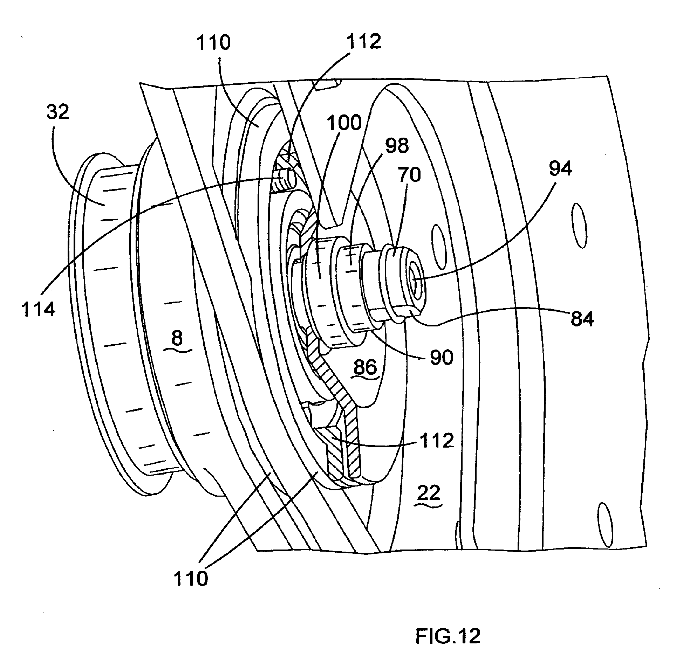

Figures 12 to 18 show the mechanism by which the forward support 8 rotatably supports the cutting blade 10.

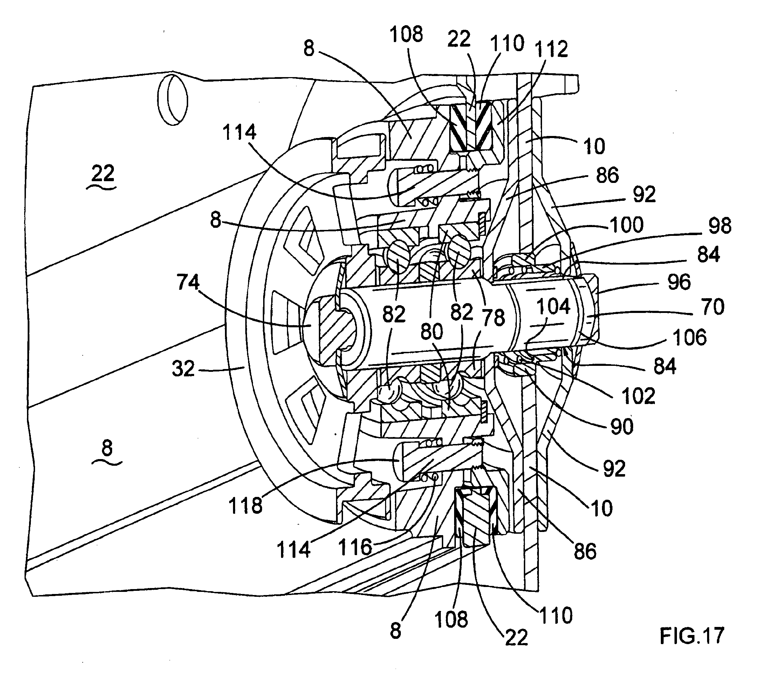

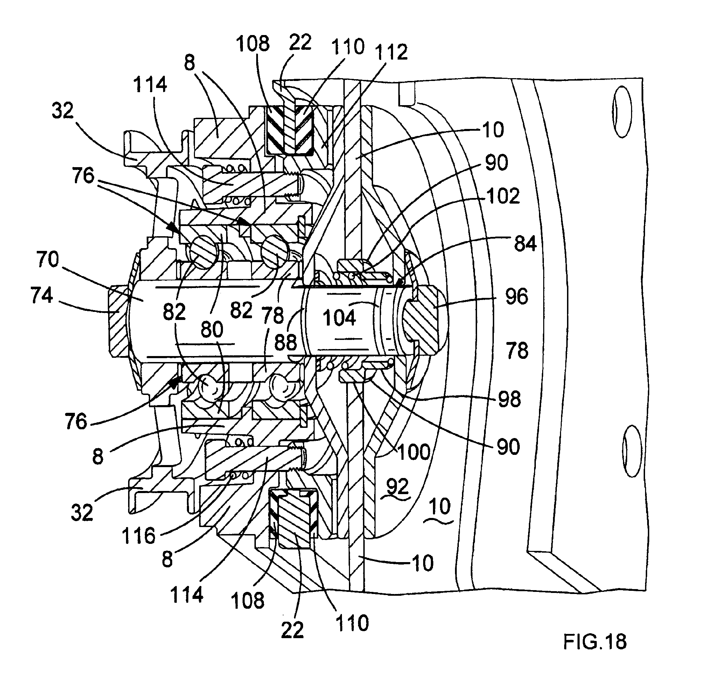

Referring to Figures 17 and 18, the driven wheel 32 is rigidly attached to the spindle 70 via a flanged nut 74. Rotation of the driven wheel 32 results in rotation of the spindle 70. The spindle 70 is mounted in the forward section 8 using two ball bearing races 76, each comprising an inner track 78 rigidly connected to the spindle 70, an outer track 80 rigidly connected to the forward support 8, and a set of ball bearings 82 sandwiched between the two tracks 78, 80 which allow the outer track 80 to rotate relative to the inner track 78.

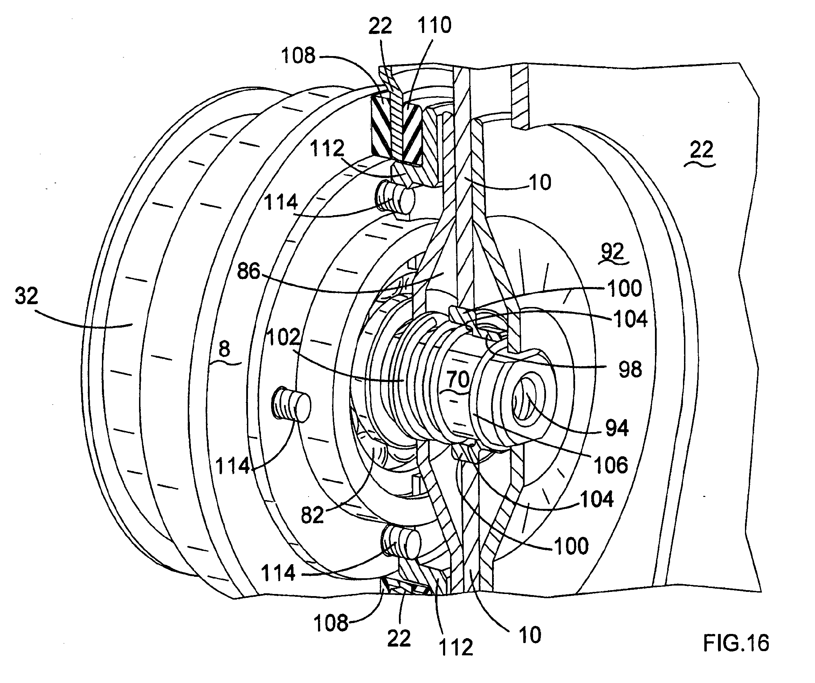

Formed along a part of the length of the spindle 70 are two flat surfaces 84 (see Figure 16). A second support disk 86 comprises a central hole which is predominantly circular with the same diameter of the spindle 70, but with two flat sides which correspond in dimensions to the flat surfaces 84 of the spindle 70. The second support disk 86 is mounted on the end of the spindle 70 and abuts against shoulders 88 on the spindle 70 formed by the two flat surfaces 84. The flat surfaces 84 ensure that the second support disk is rotationally fixed to the spindle 70 so that rotation of the spindle 70 results in rotation of the second support disk 86.

An adaptor 90 (described in more detail below) is mounted on the spindle 70. The adaptor can freely rotate about the spindle 70. The cutting blade 10 is mounted on the adaptor 90.

A first support disk 92 comprises a central hole which is predominantly circular with the same diameter of the spindle 70, but with two flat sides which correspond in dimensions to the flat surfaces 84 of the spindle 70. The first support disk 92 is mounted on the end of the spindle 70 and abuts against the cutting blade 10. The flat surfaces 84 ensure that the first support disk 92 is rotationally fixed to the spindle 70 so that rotation of the spindle 70 results in rotation of the first support disk 86.

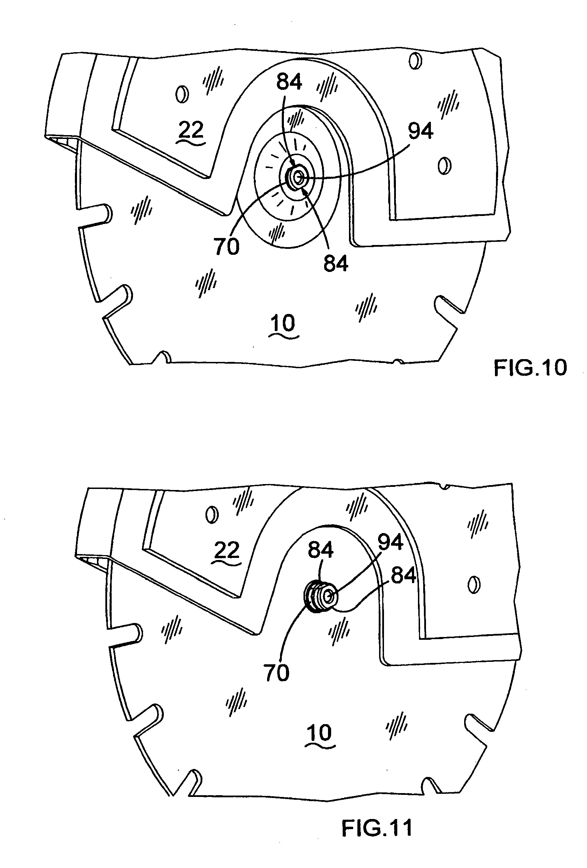

A threaded hole 94 is formed in the end of the spindle 70 (see Figures 10 to 12). A second flanged nut 96 is screwed into the hole 94. The flange of the nut 96 pushes the first support disk 92 against the blade 10 which in turn pushes the blade 10 against the second support disk 86. The blade 10 becomes sandwiched between the two support disks 86, 92. Rotation of the support disks 86, 92 by the spindle 70 results in rotation of the blade due to the frictional contact of the blade 10 being sandwiched between the two disks 86, 92. By frictionally driving the blade 10, it allows rotational movement of the blade 10 relative to the spindle 70 if the blade becomes snagged during the operation of the power cutter.

The automatic blade support adjustment mechanism will now be described.

Cutting blades of different sizes can be used. Different sized cutting blades 10 have different sized holes in their centres through which the spindle 70 passes. It is intended that the present power cutter will be able to fit cutting blades 10 having two different sizes of hole through their centres. This is achieved by the use of the adaptor 90.

Referring to Figures 17 and 18, the adaptor is mounted on the spindle 70 between the two support disks 86, 92. As well as being freely rotatable about the spindle 70, the adaptor 90 can axially slide along the spindle 70 between the disks 86,92.

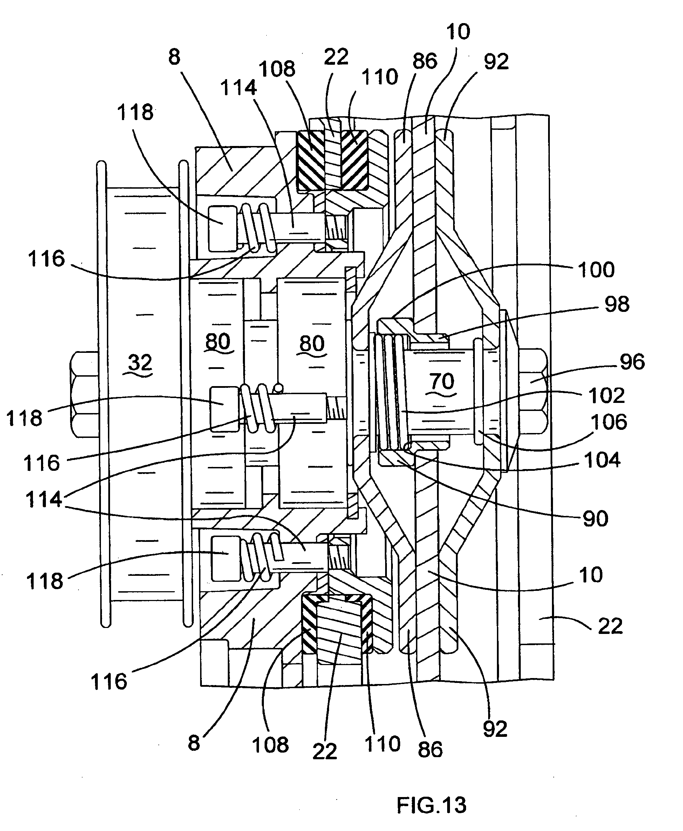

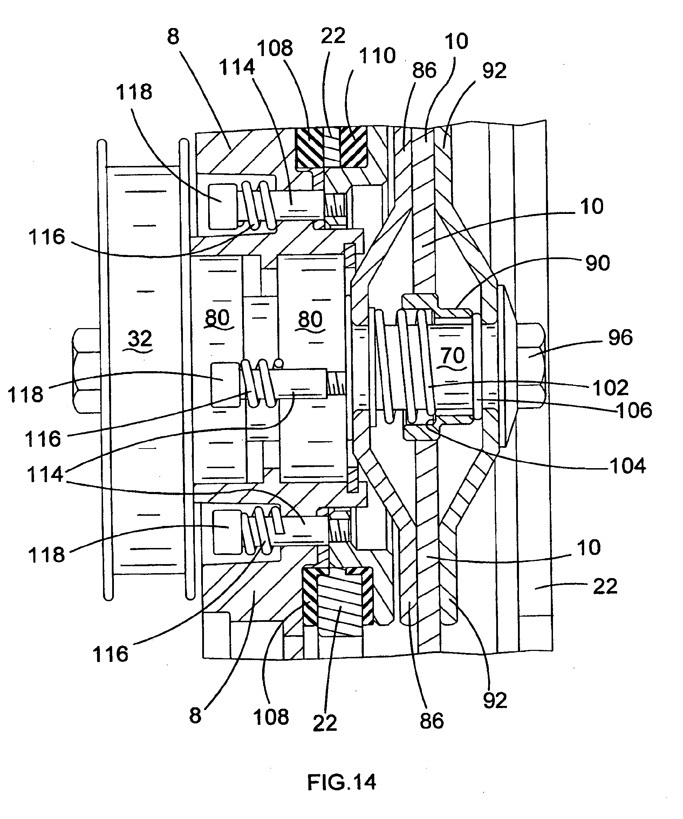

The adaptor comprises a front section 98 and a rear section 100. The front section 98 has a first outer diameter, the rear section 100 has a second larger outer diameter. The two sections allow blades 10 with holes of different diameters to be mounted onto the spindle 70. In figures 14 to 18, it can be seen that a blade 10 with a central hole of a first diameter is mounted on the rear section 100 of the adaptor 90. In figure 13, it can be seen that a blade 10 with a central hole of a second diameter is mounted on the front section 98 of the adaptor 90.

A spring 102 is sandwiched between the second support disk 86 and an inner shoulder 104 of the adaptor 90. The spring 102 biases the adaptor towards the first support disk 92. A circlip 106 is located around the spindle 70 which limits the maximum extent of axial travel of the adaptor 90. When the adaptor 90 is allowed to slide to its maximum extent and abut against the circlip 106, the rear section 100 is located centrally between the support disks 86, 92.

When a blade 10, having a centre hole with the same diameter of the rear section 100 of the adaptor is mounted onto the adapter, it fits onto the rear section 100 of the adaptor as shown in Figure 14 to 18. As such, the blade 10 is centrally located between the two support disks 86. 92. However, when a blade 10, having a centre hole with the same diameter of the front section 98 of the adaptor is mounted onto the adapter, it fits onto the front section 98 of the adaptor as shown in Figure 13. It is prevented from sliding onto the rear section. In order for the blade 10 to be secured onto the spindle 70 by the support disks 86, 92, it must be located centrally between the two. When the first support disk 92 is mounted onto the spindle 70 after the blade, it pushes the blade 10 and adaptor 90 against the biasing force of the spring 102, moving the adaptor 90 towards the second support disk 86 as shown in Figure 13. When the blade is securely mounted on the spindle 70, it is centrally located between the support disks. The front section is similarly mounted centrally. The adaptor enables two types of blade 10 to be used, it moving automatically in accordance with blade size.

The pivotal blade guard 22 will now be described.

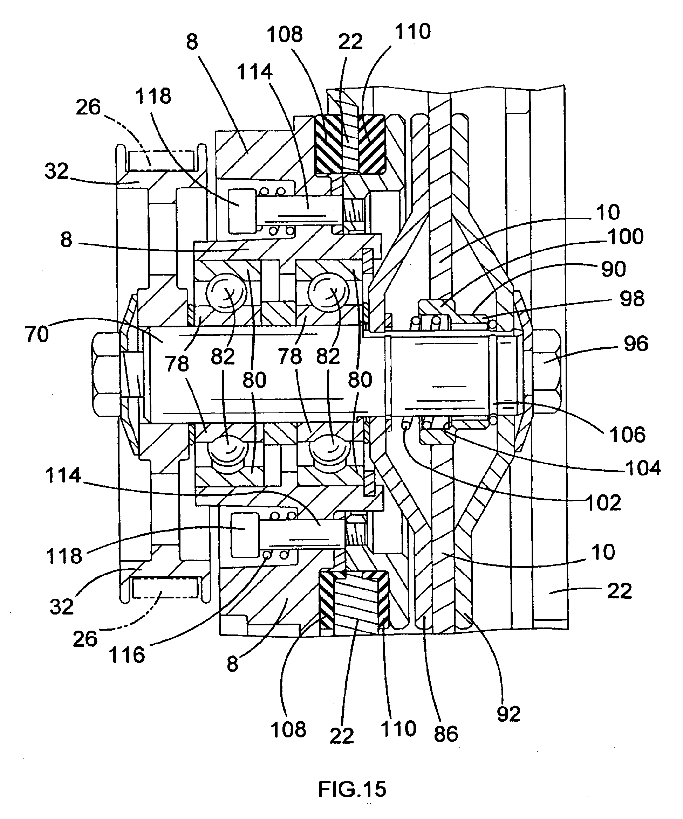

Referring to Figure 15, the blade guard 22 is held by being sandwiched between two pieces of rubber 108, 110. The blade guard 22 can pivot about the spindle 70. However, it is frictionally held by the two pieces of rubber 108, 110. In order to pivot the guard 22, the operator must overcome the friction between the guard 22 and the rubber 108, 110.

A metal bracket 112 is attached to the forward section 8 via four bolts 114. The bolts pass freely through the forward section 8 and threadedly engage with threaded holes formed in the bracket 112. A helical spring 116 is sandwiched between the head 118 of each bolt 114 and the forward section 8, biasing the bolts 114 out of the holes, pulling the bracket 112 towards the forward section. Sandwiched between the bracket and the forward section 8 is a first piece of rubber, 108, the guard 22, a second piece of rubber 110 to form a rubber - guard - rubber sandwich. The strength of the spring 116 determines the amount of frictional force there is between the rubber 108, 110 and the guard.

In order to pivot the guard the operator holds the grasp 72 and pivots the guard 22 by over coming the frictional force between the guard and the rubber 108, 110.

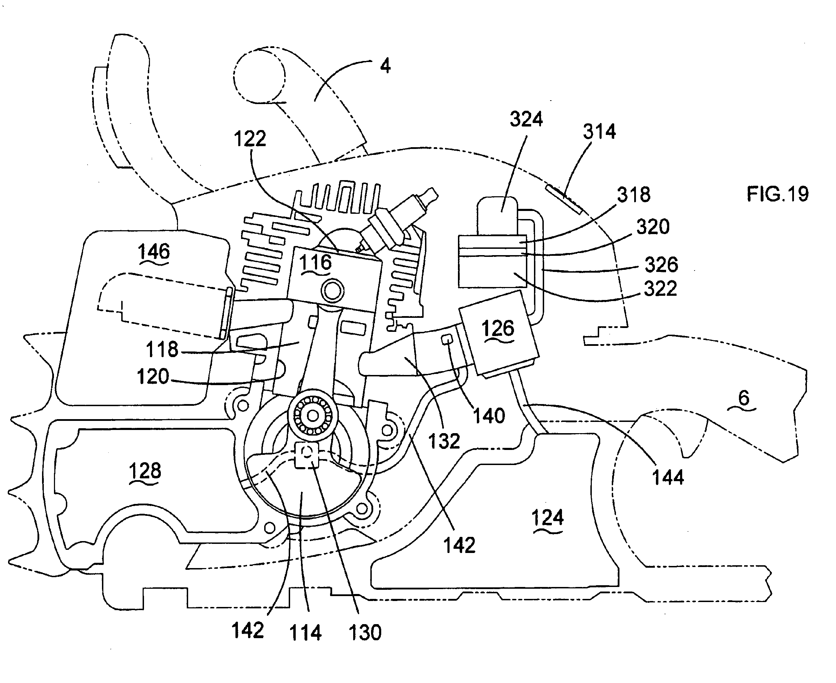

The oil and petrol management system will now be described with reference to Figure 19.

The internal combustion engine is fed with fuel from a carburetor 126. The engine burns the fuel in well known manner to generate rotary motion of its crank shaft 114, which connects to the output shaft 28. The exhaust gases are then expelled from the engine 24 through an exhaust 146 to the surrounding atmosphere.

The power cutter will comprise a petrol tank 124 in which is located petrol for driving the two stroke internal combustion engine 24. Petrol will pass from the tank 124 via passageway generally indicated by dashed lines 144 through the carburetor 126 which will mix it with air prior to being forwarded to the cylinder 118 where it will be burnt. Detail of the supply of air, including its filtration will be described in more detail below. A second tank 128 will also be mounted in the body 2 as shown in which lubricating oil will be contained. The oil will be pumped out of the tank 128 via an oil pump 130, which is mounted on the crank shaft housing which will be driven via a gear arrangement (not shown) from the crank shaft 114. The oil pump 130, will pump the oil from the oil tank 128 via the pump 130 into the passageway 132 between the carburetor 126 and the cylinder 120, through the passageways indicated by dashed lines 142, and then mixing the oil with the air/petrol mixture generated by the carburetor 126. It will inject oil at the ratio 1:50 in relation to the petrol. A sensor 140 will be mounted within the passageway 132 between the carburetor 126 and cylinder 120. The sensor will determine whether oil is being pumped correctly in to the passageway 132 either by checking the pressure of the oil as it enters the passageway 132 or by detecting the presence of oil in the passageway 132. The construction of such sensors are well known and therefore will not be described in any further detail. The engine will be controlled by an electronic ignition system. The sensor 140 will provide signals to the electronic ignition system about the oil being pumped into the passageway 132. In the event that insufficient or no oil is pumped into the passageway due to the fact that the oil tank is empty or there is a blockage in an oil pipe 142, the sensor 140 will send the signal to the ignition system. The ignition system will then either put the engine into an idle mode or switch the engine off entirely, depending on the settings of the ignition system. This will ensure that lubricating oil is always added to the petrol in the correct amount prior to combustion within the two stroke engine.

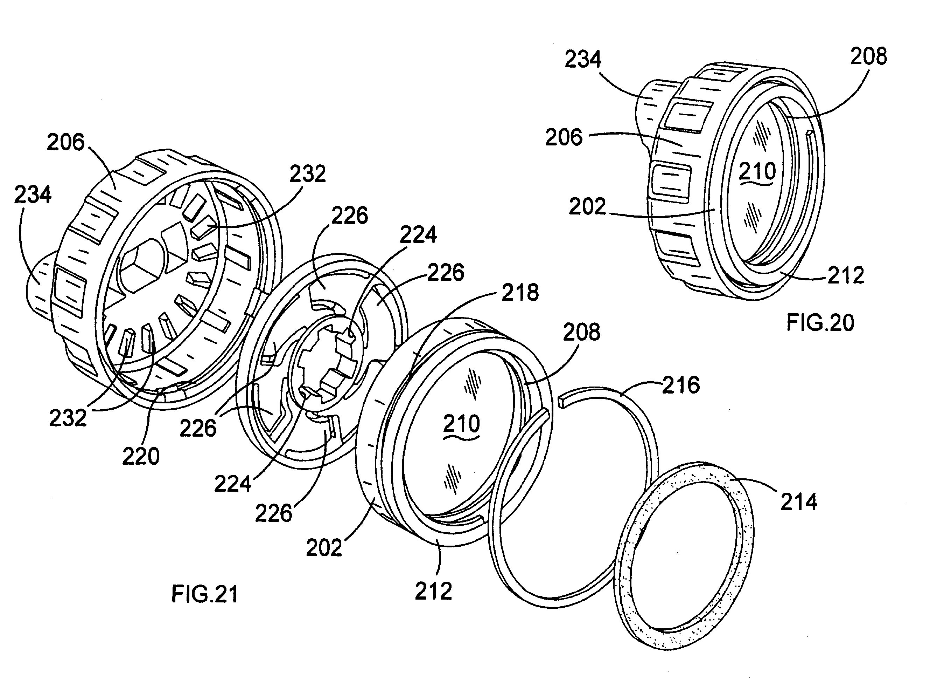

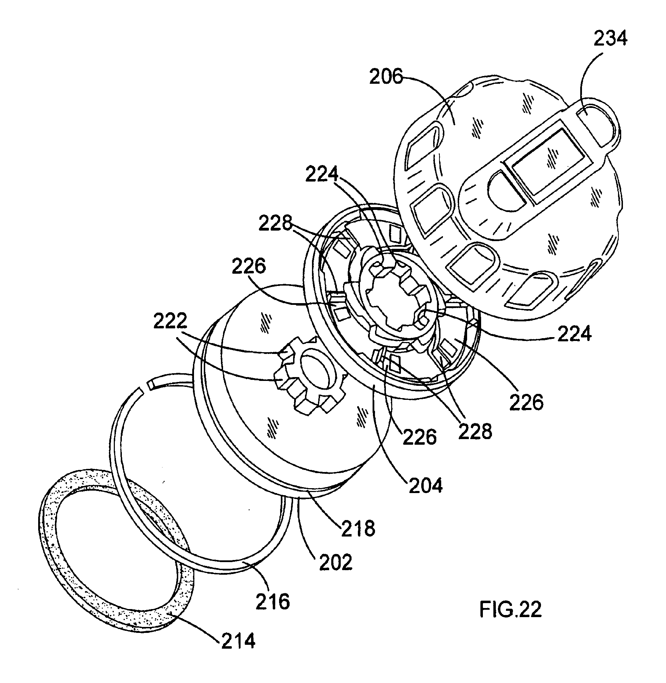

The construction of the fuel cap will now be described with reference to Figures 20 to 23.

The petrol tank 124 will be mounted within the body of the unit as generally indicated in Figure 19. The tank 124 will be sealed by a fuel cap 13 as shown on Figure 2.

The fuel cap will comprise an inner cap 202, a clutch 204 and an outer cap 206. The inner cap is of a tubular construction with one end 210 being sealed. Formed on the inside surface of a side wall 212 is a thread 208. When the fuel cap is screwed onto the fuel tank, the thread 208 slidingly engages with a thread formed around the external surface of the neck of the fuel tank 124.

Located inside the inner cap 202 adjacent the end 210 is a seal 214. When the fuel cap is screwed onto the fuel tank, the seal 214 ensures that no fuel can escape from the tank. The inner cap 2 locates within the outer cap 206. Sandwiched between the two is the clutch 204. A clip 216 locates within a groove 218 of the inner cap and also engages with an inner groove 220 formed within the outer cap. The clip holds the inner cap inside the outer cap whilst allowing it to freely rotate within the outer cap 206. The inner cap comprises a number of teeth 222 integrally formed with the inner cap. The teeth locate within corresponding slots 224 formed within the clutch, thus rotation of the inner cap causes rotation of the clutch 204. Formed on the clutch 204 are a plurality of resilient arms 226 mounted on the ends of which are pegs 228. The pegs 228 face towards the internal end wall 230 of the outer cap. Formed on the wall are a plurality of ridges 232. The pegs on the clutch are arranged to co-operate with the ridges 232 in the outer cap.

Rotation of the outer cap 206 causes the ridges 232 to engage with the pegs 228 resulting in rotation of the clutch 204, which in turn rotates the inner cap 202 via the teeth 222. When the fuel cap is screwed onto the fuel tank, the inner cap 202 threadingly engages with the neck of the fuel tank, the rotation of the inner cap 202 being caused by rotation of the outer cap 6 via an operator rotating it using a finger grip 234. When the seal 214 located within the inner cap engages with the end of the neck of the fuel tank, the inner cap 202 is prevented from further rotation. This in turn prevents further rotation of the clutch 204. However as the operator continues to exert a rotational force on the outer cap 206, the ridges 232 are caused to ride over the pegs 228, the movement of the pegs 228 being allowed by the resilient arms 226 upon which they are mounted. In this way the operator can rotate the outer cap whilst the inner cap remains stationary thus preventing the operator from over-tightening the fuel cap onto the neck of the fuel tank.

The air filtration mechanism for the carburettor 126 will now be described.

The two stroke engine comprises a carburetor 126 which mixes liquid fuel with air to generate a combustible mixture for powering the engine. However, due to the operation of the power cutter, a large amount of dust is generated which mixes with the surrounding air. This results in dust laden air. In order to ensure that the air entering the carburetor is free from dust it must pass through a filter system to remove the dust.

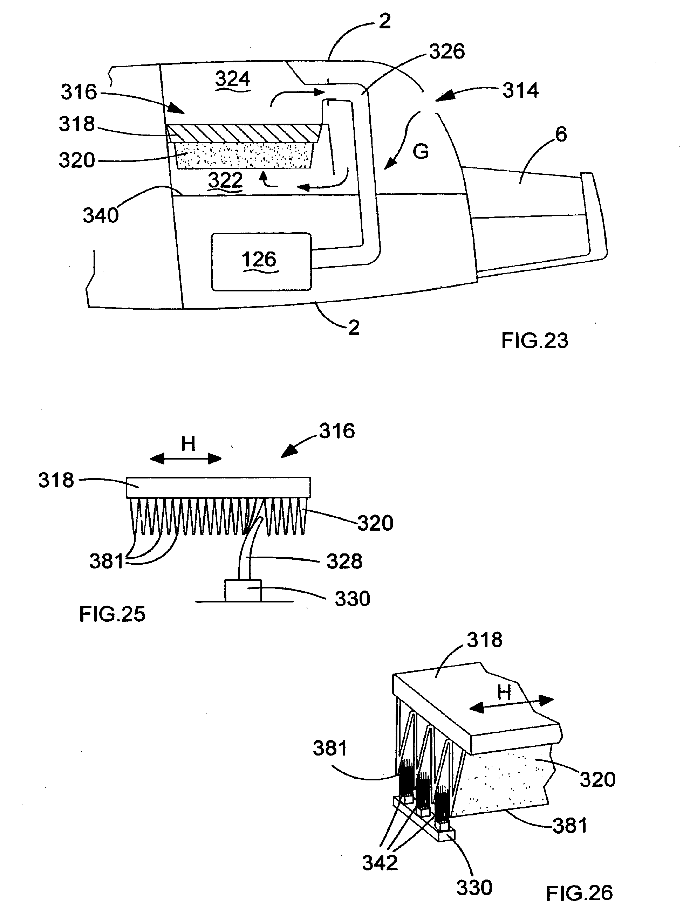

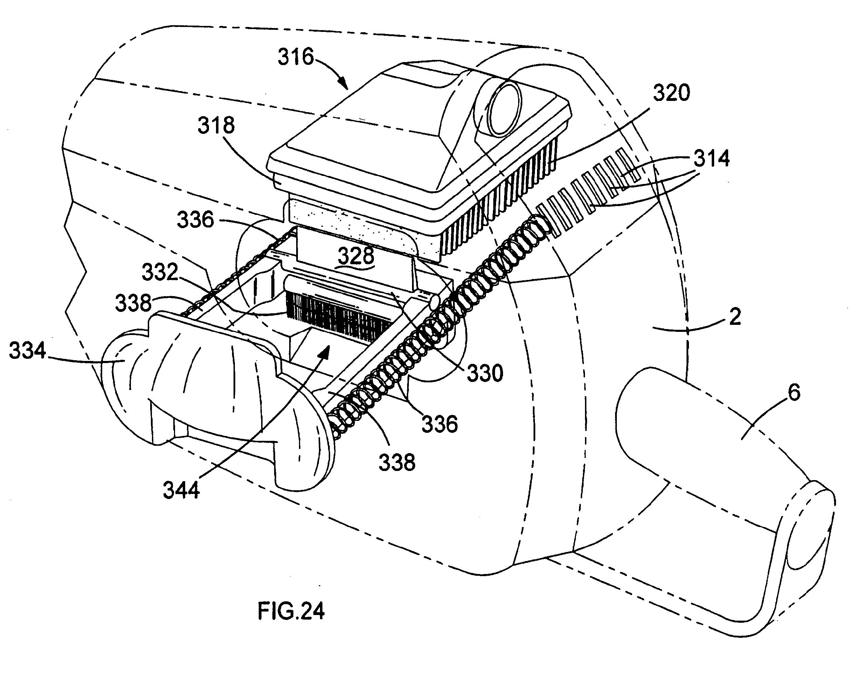

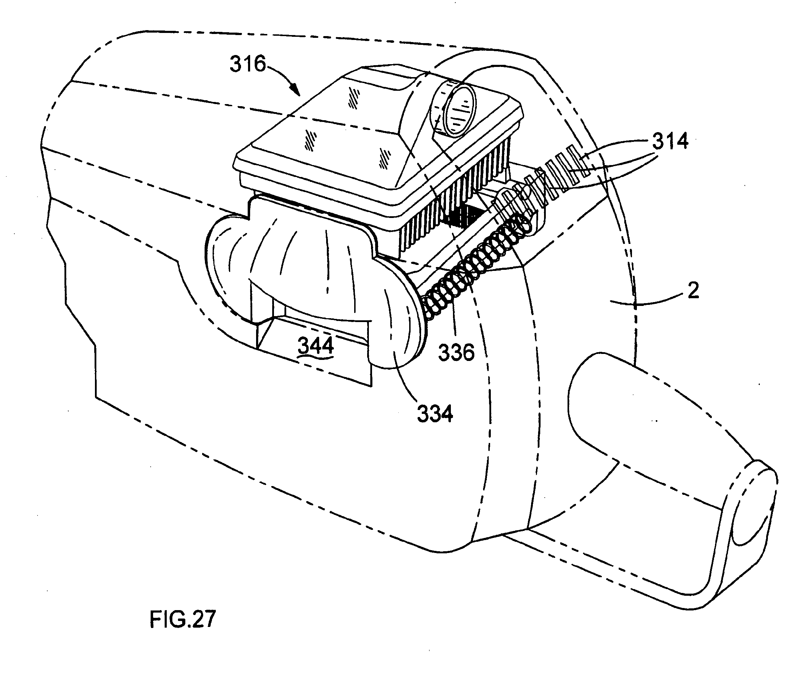

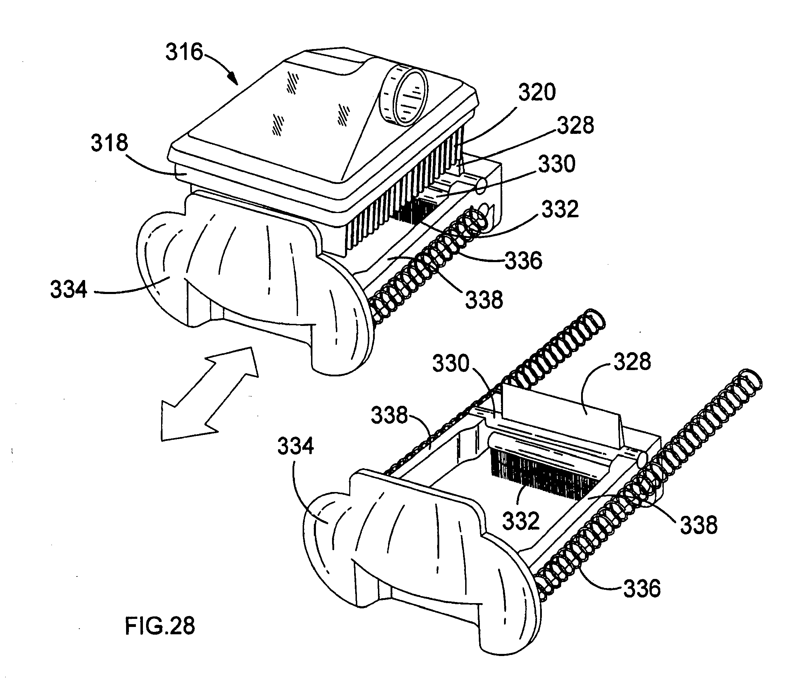

The filter system will now be described with reference to Figures 23 to 29.

Inside the body 2 is a filter unit 316 comprising a plastic base 318 and filter paper 320 folded to form pleats. The filter unit 316 is located within the body 2 so that the pleats 320 hang vertically downwards when the power cutter is located in its standard orientation i.e. when it is located on a horizontal surface as shown in Figure 1.

Air will be sucked through the filter system by the carburetor 126. Air enters slots 314 on the rear of the body 2. Air passes (Arrow G) to a space 322 underneath the filter unit 316 and then passes through the filter paper 320 to a space 324 above the filter unit 316. Any dust entrained within the air is trapped by the filter unit 316 and held within the pleats of the filter paper 320.

The clean air then passes from the space 324, through a hose 326 to the carburetor 126 located below the space 322 below the filter unit 316.

In order to enable the operator to remove the dust trapped within the pleats of the filter paper 320, a cleaning device is provided. The cleaning device comprises a rubber flap 328, mounted on the top of a plastic base 330, a brush 332 attached to the bottom of the plastic base 330, a handle 334 attached to the plastic base 330 via two rigid arms 338. The base 330 can slide within the space 322 below the filter unit 316, widthways across the body 2. Movement is caused by the operator pulling the handle 334 away from the side of the body 2. Two springs 336 bias the handle 334 towards the side of the body 2.

In order to clean the filter unit, the operator pulls the handle 334, to move the base 330 across the width of the body 2 in the direction of Arrow H, and then releases it to allow it to return in the opposite direction under the biasing force of the springs 336.

As the base 330 slides across the width, the rubber flap 328 engage with the pleats 320, causing the pleats to flex, as best seen in Figure 25, knocking the dust off the pleats 320. The dust drops to the base 340 of the space 322 below the filter unit 316.

The brush 332 slidingly engages with the base 340 of the space 322. The brush 332 brushes the dust to one side or the other, depending on the direction of movement. An aperture 344 is formed on one side of the body 2. As the brush approaches the side of the body, it pushes the dust being swept along the base through the apertures, expelling it from the body 2.

Though Figure 25 shows the flap 328 moving perpendicularly to the direction of the pleats 320, it will be appreciated by a person skilled in the art that is possible to rotate the filter paper 320 so that the pleats run in parallel to the sliding movement of the flap 328 as shown in Figure 26. In such a scenario, the rubber flap 28 may be replaced by a plurality of brushes 342. In figures 25 and 26, the lower edges of the pleats are indicated by reference number 381

The construction of the rear handle will now be described with reference to Figures 1 and 2.

The body of the power cutter is constructed in the form of a plastic casing constructed from a number of plastic clamshell rigidly connected together. The rear clam shell 430 connects to the rear handle 6. In existing designs of power cutter, the rear handle 6 is integral with the rear clam shell 430. However, if the handle 6 is broken, the whole clam shell 430 needs to be replaced. As handle breakage is common it is desirable to avoid this.

Therefore, the rear handle 6 in the present invention is constructed as a separate item to that of the rear clam shell 430 (or body 2).

The rear handle 6 is constructed from a separate single clam shell 431 which is joined at its top 432 at two points 434 and at its bottom at a single point 436. Each of the three points 434, 436 is joined using a bolt which screws into the plastic clam shell 430. Vibration dampening material may be used in conjunction with the bolts to reduce the amount of vibration transferred to the handle 6 from the body 2. The use of such vibration dampening material allows limited movement of the handle 6 relative to the rear clam 430 at each of the three points. The movement could be either linear or rotational. One such construction is to surround the bolts with the dampening material in order to sandwich it between the bolts and parts of the clam shell of the rear handle 6.

The top 432 of the handle 6 is in the form of a cross bar. The shape is such that the bolts fastening the top 432 of the handle to the rear of the clam shell 430 are aligned with each other and thus provide a pivot axis 440 for the rear handle 6 about which it can rotate by a limited amount.

A person skilled in the art will appreciate that the handle may be constructed from a number of clam shell connect rigidly together. Rubber soft grip over mold 442 may also be added to the handle for additional comfort.

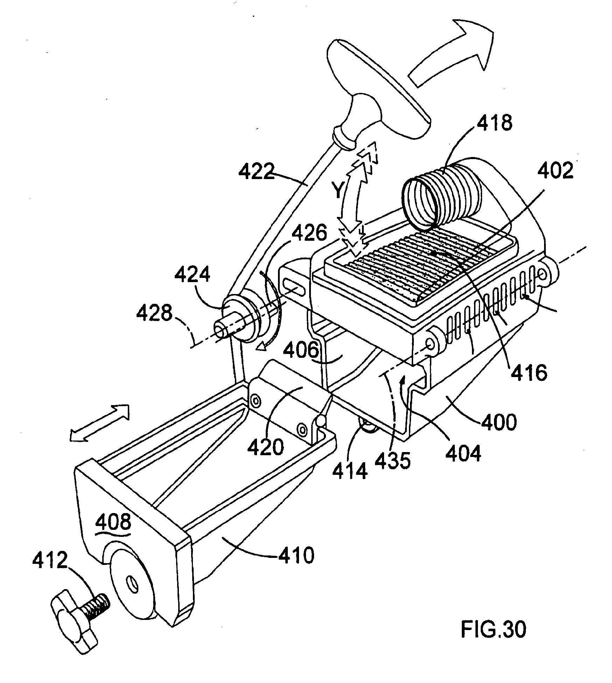

A second embodiment of an air filtration system will now be described with reference to Figure 30.

The filter device comprises a box 400 in which is mounted filter paper 402 which is pleated and which hangs down from the top section from inside the box. A space 404 is formed below the pleat. A large aperture 406 is formed in the side of the box below the filter paper and through which a drawer 408 can be slid. The drawer comprises a receptacle 410 which locates in the space 404 immediately below the filter paper 402. The drawer 408 can be fastened into place via a screw 412 which threadedly engages a threaded hole 414 in the box. Air passes through slots 314 into the box and into the receptacle 410 in the space 404 below the filter paper 402 then through the filter paper 402 into a space 416 above the filter paper 402 and then exits the space 416 above the filter paper through a flexible tube 418 to the carburetor 126. Any dust contained in the air entering the box 400 is blocked by the filter paper 402.

A combination of two systems have been proposed to shake any dust within the filter paper 402 off the filter paper 402 into the drawer 408 of the receptacle 410 so that the drawer 408 can be removed for emptying.

The first system is very similar to that disclosed in the first embodiment described above and comprises a rubber flap 420 which is attached to the front end of the drawer 408. As the drawer 408 is inserted into the box 400 the rubber flap 420 engages with the pleated filter paper 402. As the drawer 408 slides into the box 400 the rubber flap 420 successively hits the base of each pleat causing any dust on the pleats to be knocked off and into the drawer 408. As such the action of inserting or removing the drawer 408 into the box 400 causes dust on the filter paper 402 to be loosened and allowed to be removed.

The second system relies on the starter cord 422 of the starter 12 for the two stroke engine 24 of the power saw. When the engine is started, the power cord 422 needs to be pulled in order to cause it to rotate. As the cord 422 is pulled, it rotates a pulley wheel 424 which causes an eccentric pin 426 to rotate about the axis 428 of the pulley 420. This causes one side of the box 400 to oscillate up and down as indicated by arrows Y. The other side of the box 400 is pivotally attached about an axis 435 to the body of the power cutter. The reciprocating motion of the box 400 causes dust in the filter 402 to be shaken off the filter paper 402 and into the drawer 408.

Each system cause dust trapped in the filter paper 402 to fall into the drawer. When the operator first starts up the power cutter, the action of pulling the starter cord cleans the filter paper 402. Then, the operator can subsequently clean the filter paper during the operation of the power cutter by inserting and removing the drawer 408.

It will be appreciated by a person skilled in the art that the two systems could be used separately, as well as in combination, a power cutter having only one or the other system. If will be further appreciated that the eccentric pin 426 could be replaced by a cam mechanism.

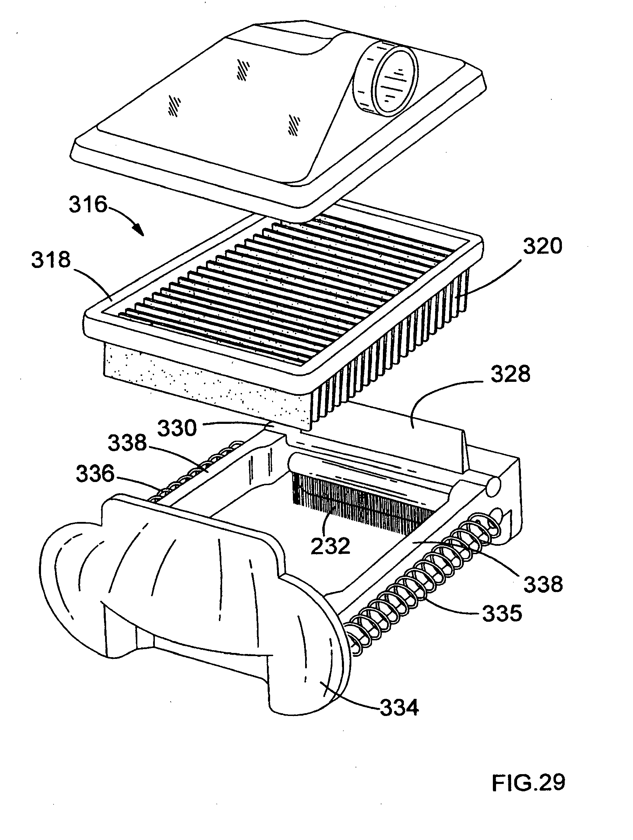

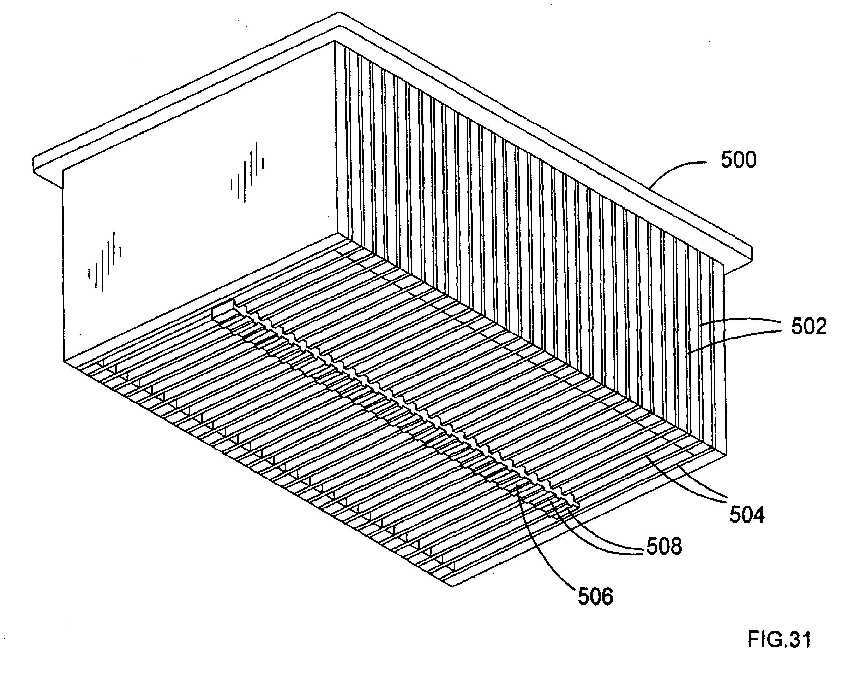

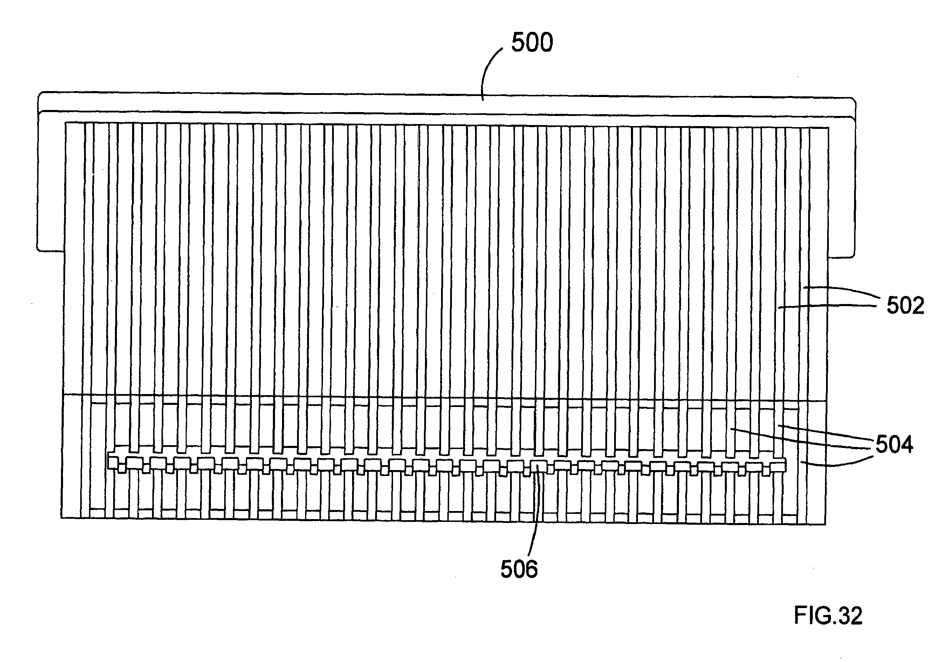

Figures 31 and 32 show an alternative construction of the air filter cleaning mechanism of Figure 29. The filter comprises a plastic base 500 to which a filter paper 502, folded to form pleats 504, is mounted. A flexible rubber track 506 is attached at its ends to the filter paper 502, and is provided with ridges 508 along its length which are arranged generally parallel to the pleats 504. When the pleat stroker in the form of a rubber flap (not shown) is moved relative to the filter as a result of a handle (not shown) being pulled out of the housing or under the action of a return spring, the rubber flap engages and moves along the rubber track 506 and causes movement of the pleats 504 each time it strikes one of the ridges 508 on the rubber track 506. This causes dust to fall off the pleats 504, but avoids direct contact between the rubber flap and the pleats 504. This therefore minimises the extent to which the pleats 504 of the filter paper 502 are subjected to wear.

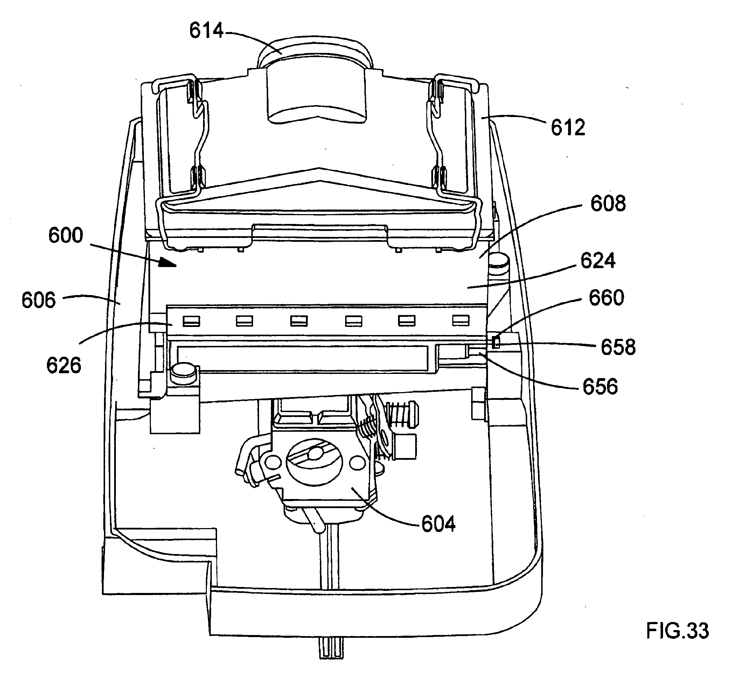

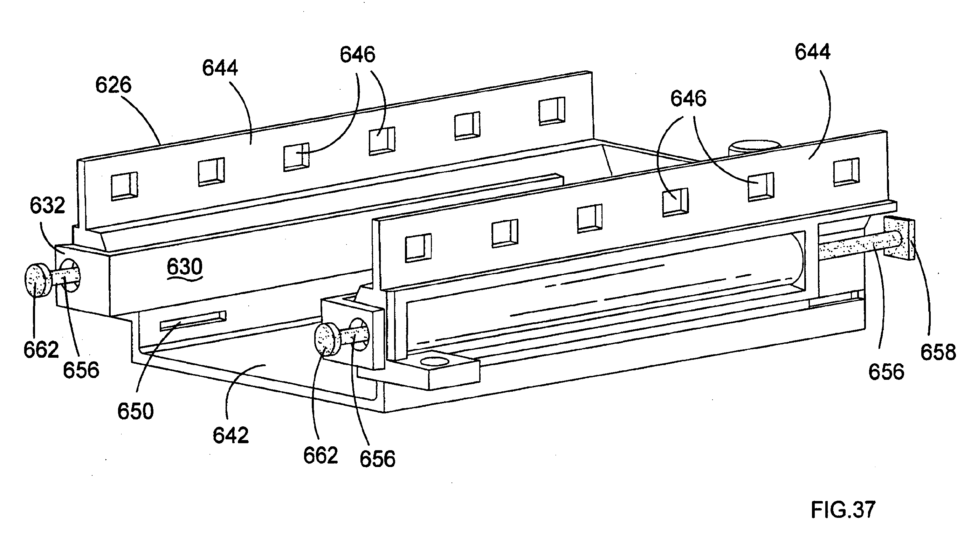

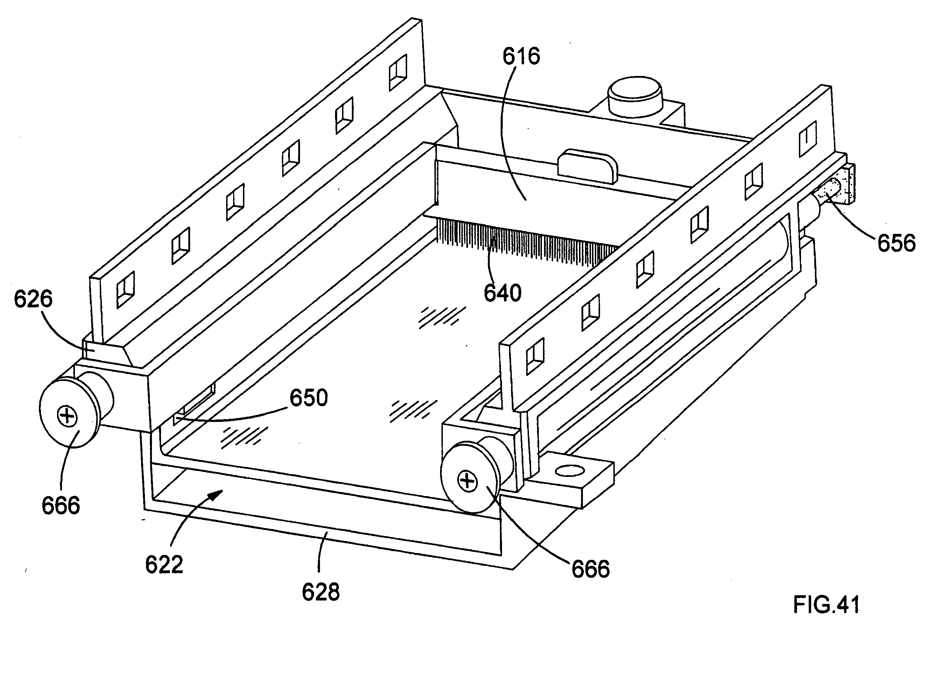

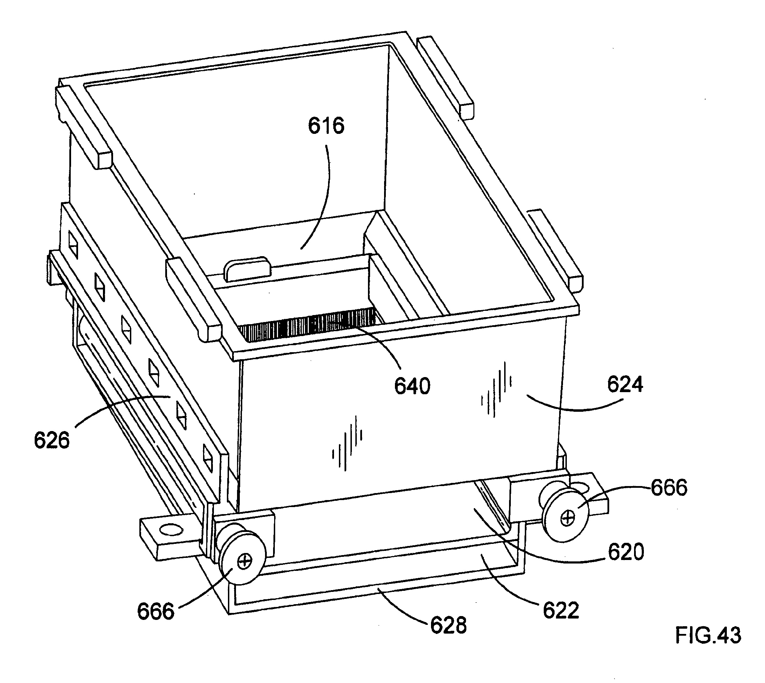

Figures 33 to 47 show an air filtration mechanism of a fourth embodiment of the invention.

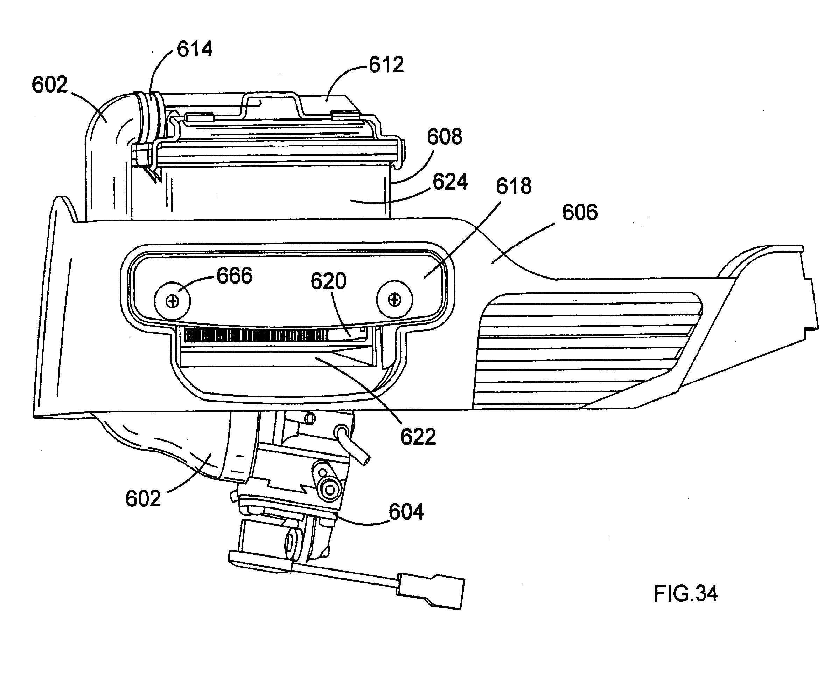

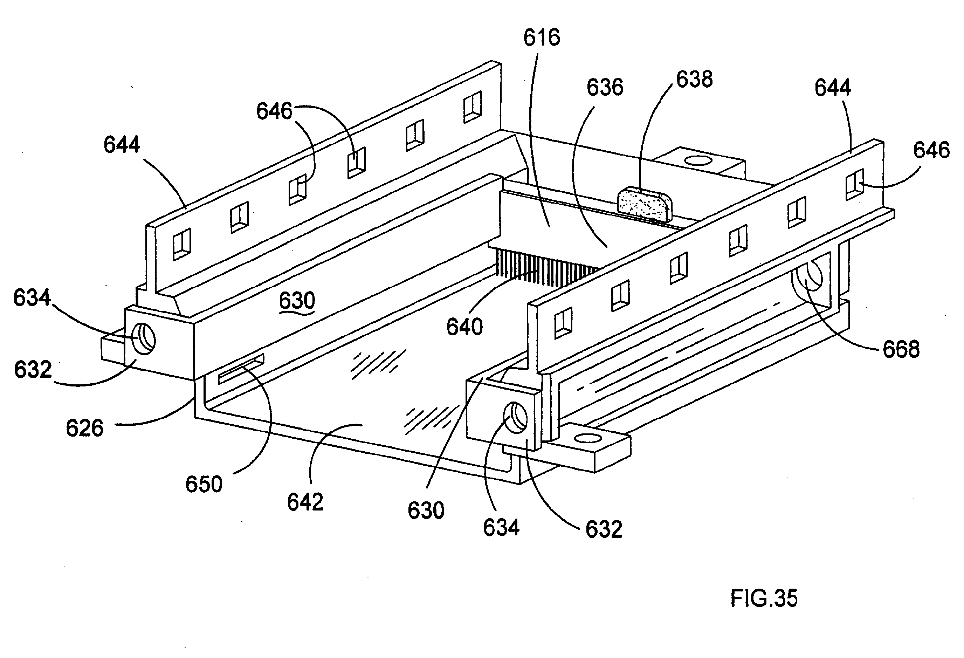

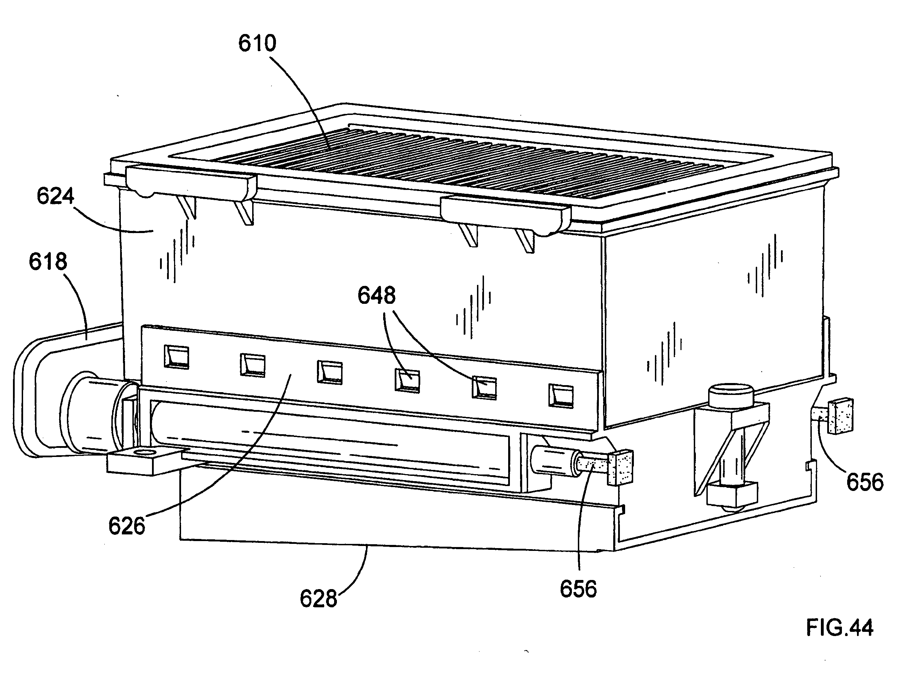

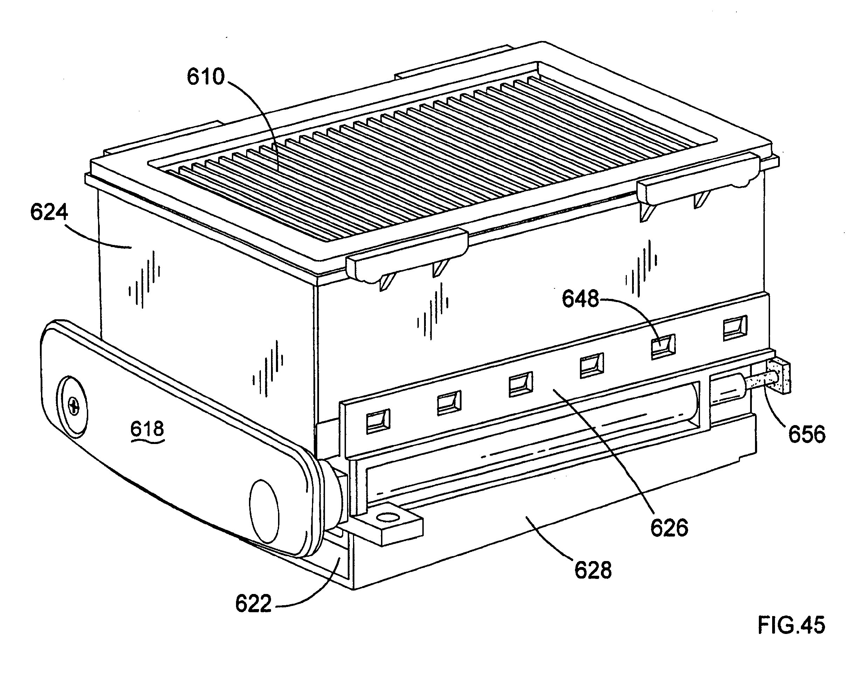

The air filtration mechanism 600 of the power cuter of Figures 33 to 47 is connected by means of a flexible tube 602 to a carburetor 604. The power cutter has an outer housing 606 to which the air filtration mechanism 600 is mounted. The air filtration mechanism 600 has a filter housing 608 containing an air filter 610 (Figures 44 and 45) and is sealed by means of a cover 612. A clean air outlet of the filter housing 608 is connected by means of a circlip 614 to the flexible tube 602 which is connected to an inlet of the carburetor 604, which is located underneath the filter housing 608 when the power cutter is in its standard orientation. This enables the air filtration mechanism 600 to be made of compact construction. A filter cleaning mechanism 616 (Figure 35) is slidably attached to the filter housing 608 and is attached to a handle 618 (Figure 34) mounted to the outer housing 606. A first opening 620 and a second opening 622 are provided adjacent the handle 618 to enable dust to be removed from the power cutter.

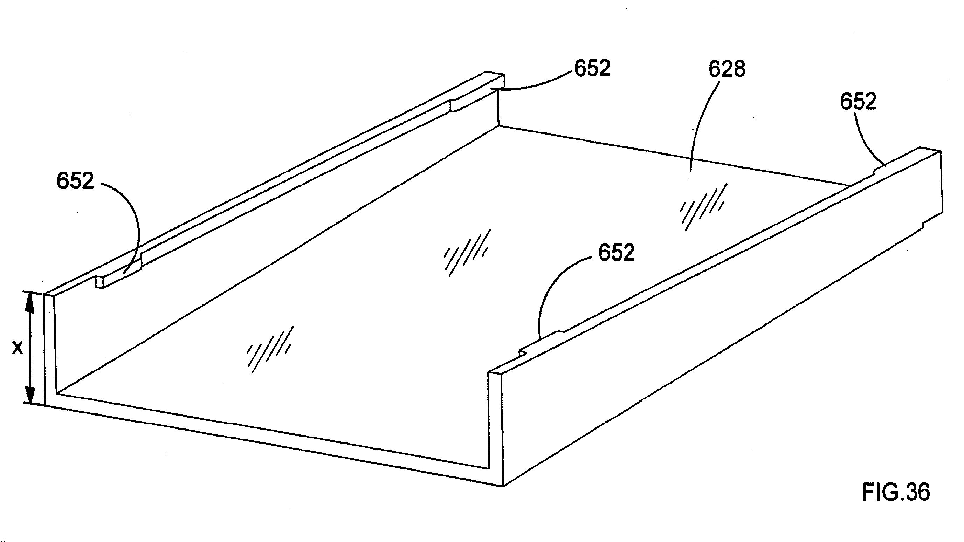

The filter housing 608 is constructed from an upper housing part 624 to which the cover 612 is mounted, a middle housing part 626 (Figure 35) for supporting the filter cleaning mechanism 616, and a lower housing part 628 (Figure 36) for defining the second opening 622.

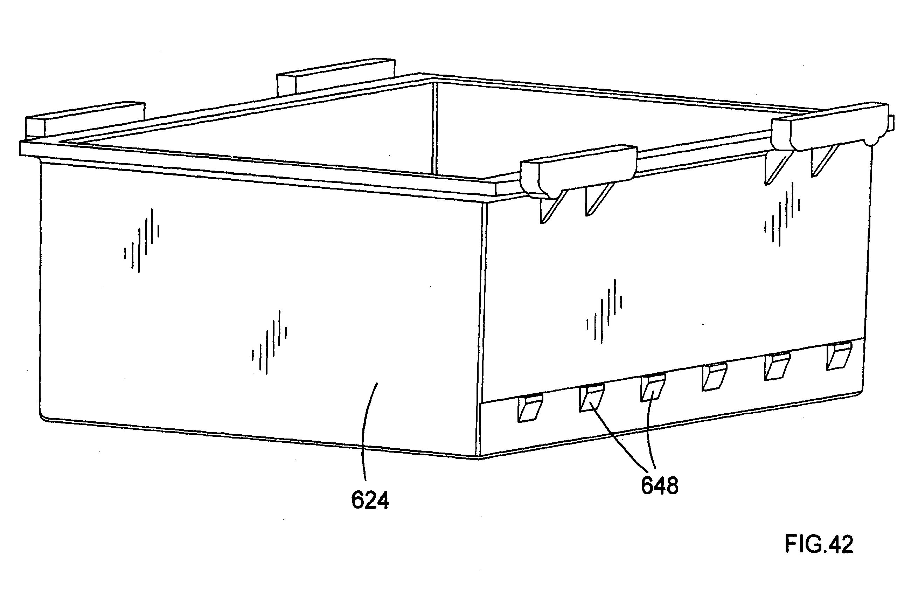

As shown in greater detail in Figure 35, the filter cleaning mechanism 616 has a pair of support arms 630, each of which is slidably mounted to the middle housing part 626 and has an outwardly extending flange 632 having an aperture 634. The arms 630 support a plastic base 636 to which a rubber flap 638 and a brush 640 are mounted, so that as the arms 630 slide relative to the middle housing part 626, the brush moves across the upper surface of the bottom 642 of the middle housing part 626. Upper sides of the middle housing part 626 are provided with rectangular apertures 646 therethrough for engaging clips 648 (Figure 42) on the upper housing part 624, to enable the upper housing part 624 and middle housing part 626 to be mounted to each other. The sides of the middle housing part 626 are also provided with slots 650 for engaging pegs 652 (Figure 36) on the lower housing part 628 to enable the middle housing part 626 and the lower housing part 628 to be mounted to each other.

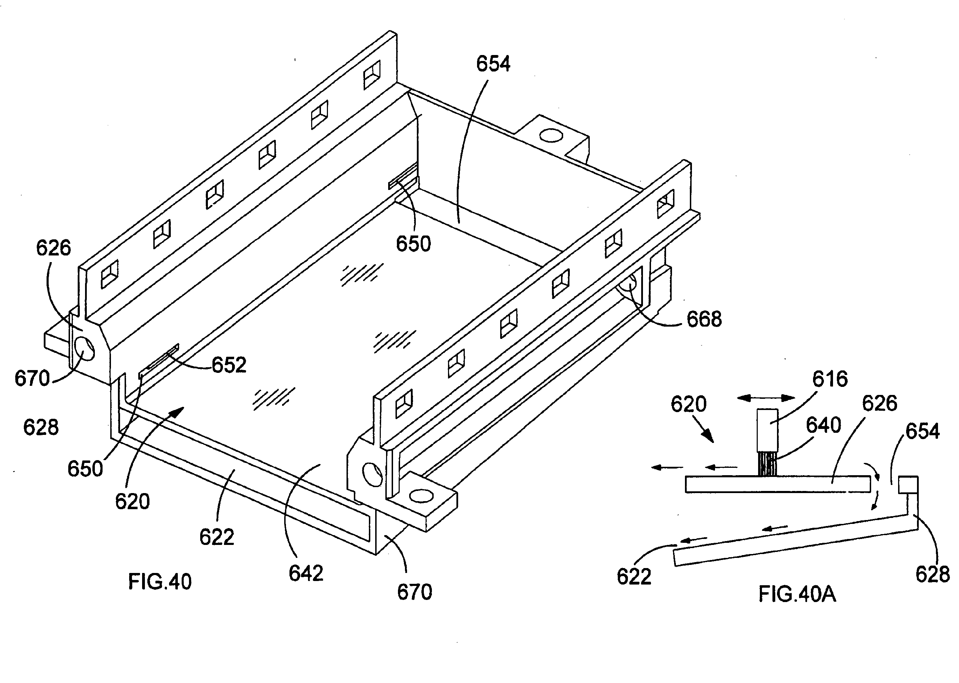

Referring to Figure 40, the upper surface of the bottom 642 of the middle housing part 626 is generally horizontal when the power cutter is in its standard orientation and is provided with a gap 654 at its rear end, such that as the brush 640 moves along the upper surface of the bottom 642 as the handle 618 moves outwardly of the outer housing 606, the brush sweeps dust forwards along the horizontal surface, and then ejects it out of the first opening 620. Rearward movement of the brush 640 relative to the middle housing part 626 pushes dust into the gap 654, where it then falls onto an inclined surface formed by the lower housing part 628 (Figure 36) where, as a result of vibrations caused by operation of the power cutter, the dust slides down the inclined surface out of the second opening 622 in the outer housing 606.

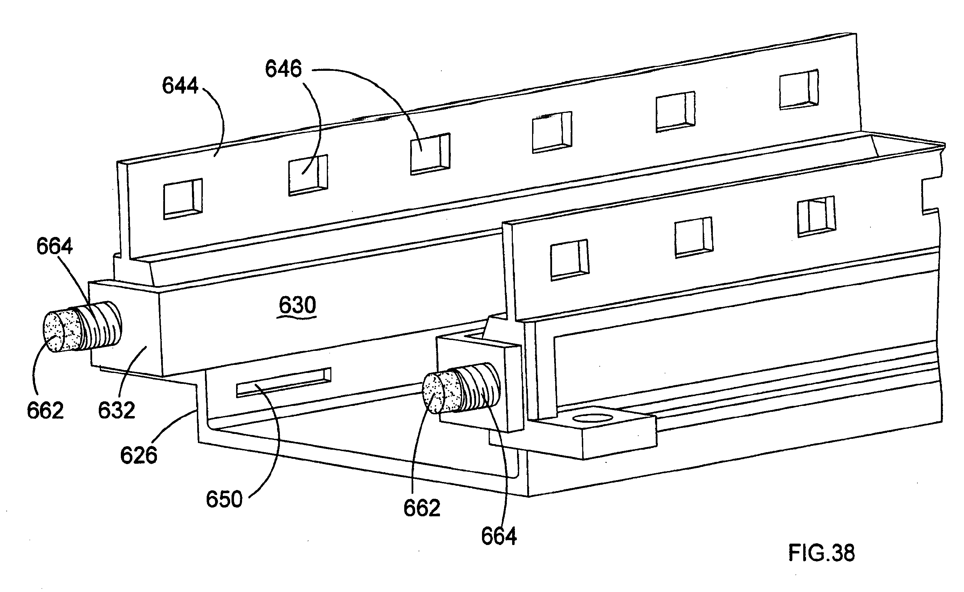

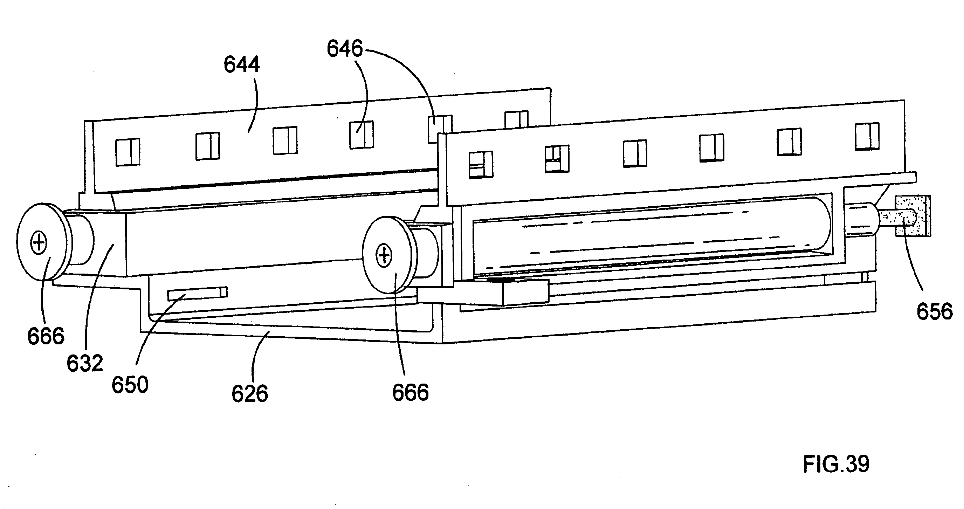

The middle housing part 626, and therefore the entire air filtration mechanism 600, is mounted by means of a pair of flexible elongate rubber rods 656 to the main housing 606 of the power cutter. Each of the rods 656 has a square stop 658 at one end which fits into a slot 660 (Figure 33) on the main housing 606. A round stop 662 is provided at the opposite end of each rod 656, and a tube 664 having an external thread passes around the rod adjacent the stop 662 (Figure 38). An internally threaded cover 666 is screwed onto the externally threaded tube 664 in order to spread loads across the entire abutment surface of the round stop 662, as shown in Figure 39, and to hold the handle 618 in place.

The rods 656 pass through apertures 668, 670 (Figure 40) in the middle housing part 626, and pass through the apertures 634 in the support arms 630. As a result, as the handle 618 is pulled outwards of the main housing 606 to move the brush 640 towards the first opening 620, the rubber rods 656 are tensioned so that the brush 640 returns to the rear of the middle housing part 626 when the handle 618 is released.

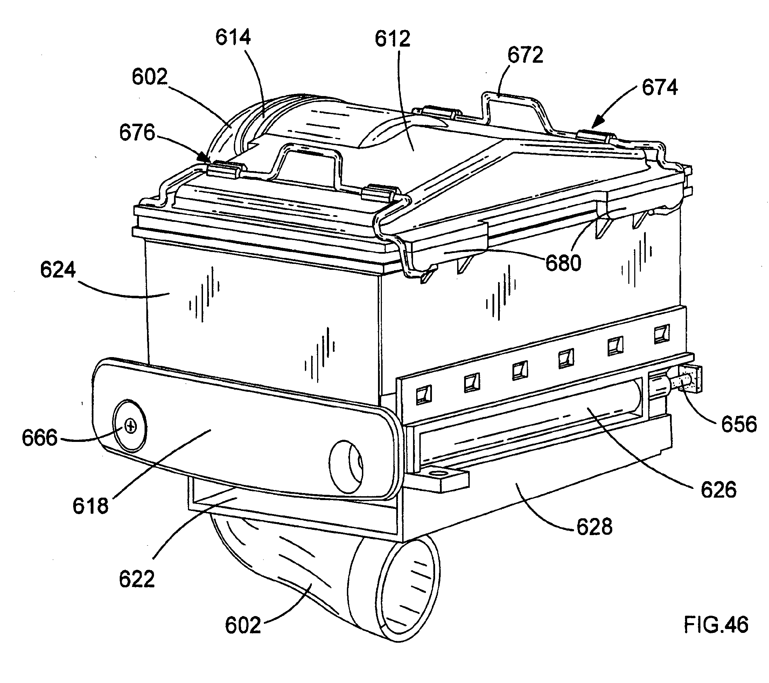

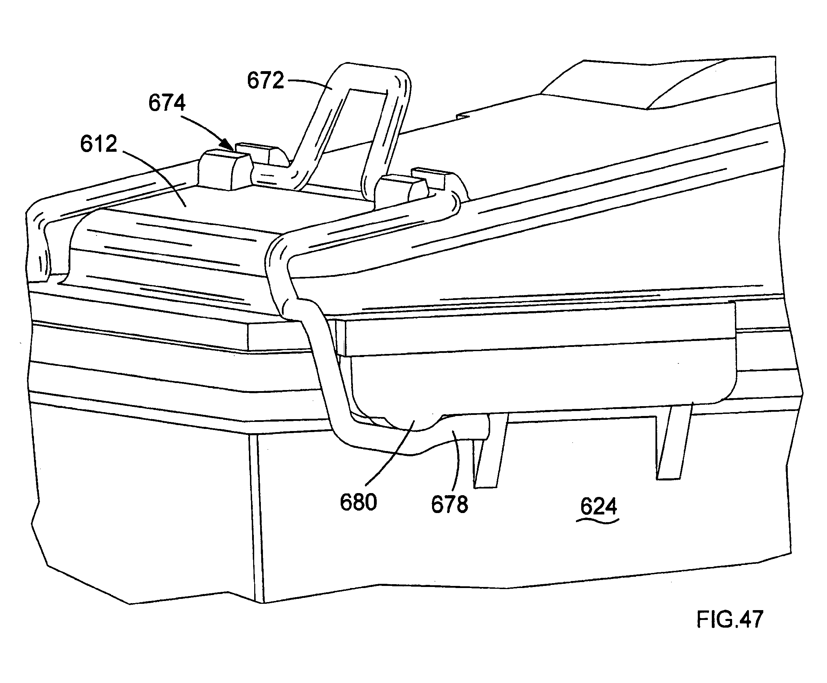

As shown in greater detail in Figures 46 and 47, the cover 612 seals the clean air outlet at the top of the filter housing 608, and is mounted to the filter housing 608 by means of a pair of clips 672, each of which can rotate about a respective pivot axis 674, 676 to cause engagement of an end 678 of the clips with a ridge 680 formed on the upper side edge of the upper housing part 624. This enables easy removal of the cover 612 to enable convenient cleaning or replacement of the filter element.

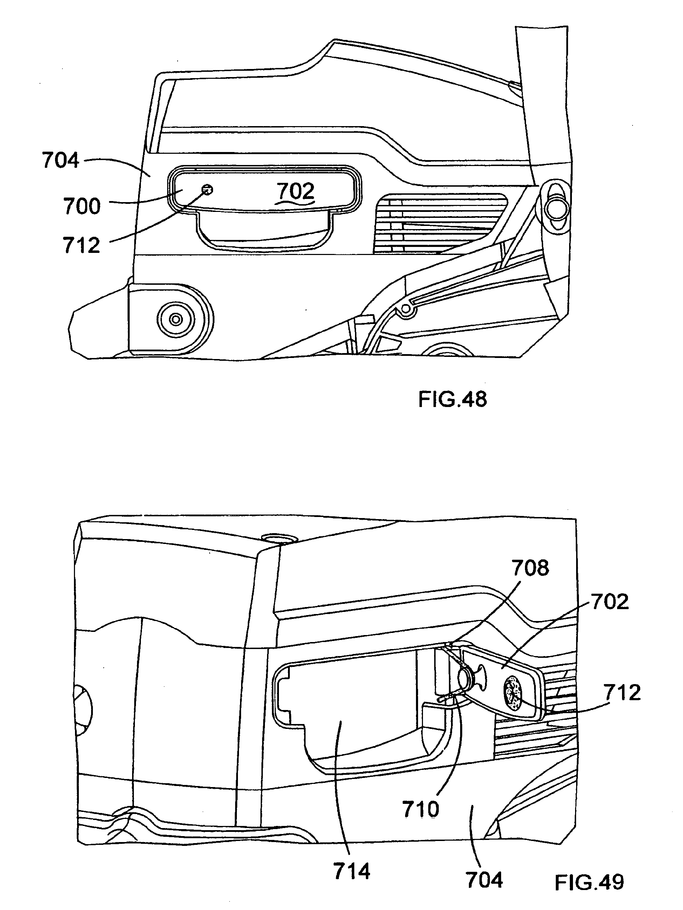

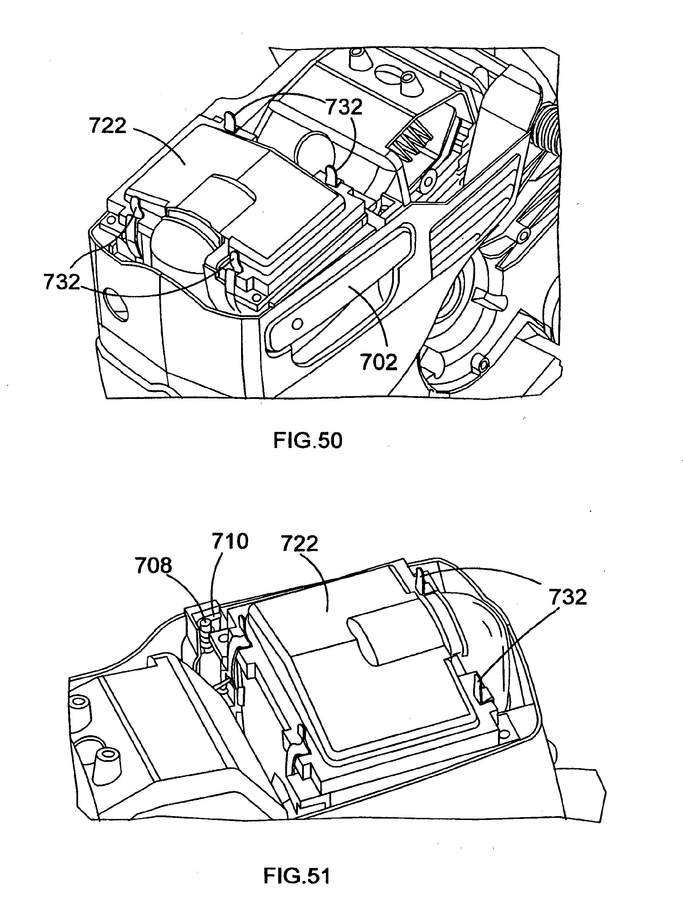

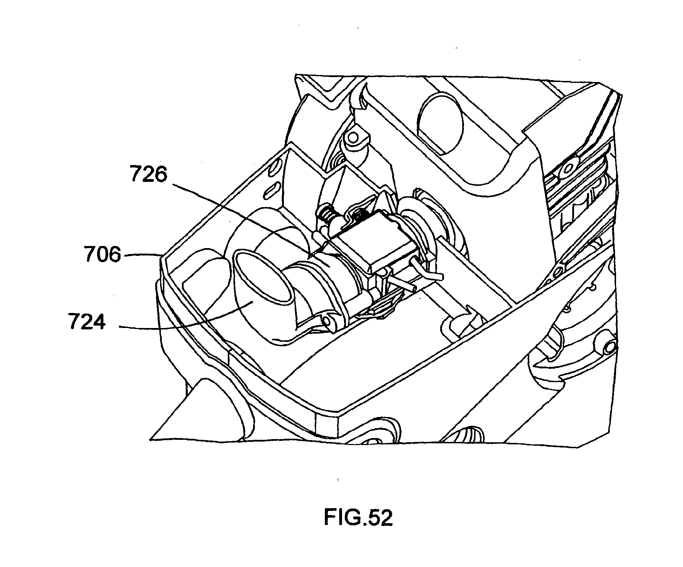

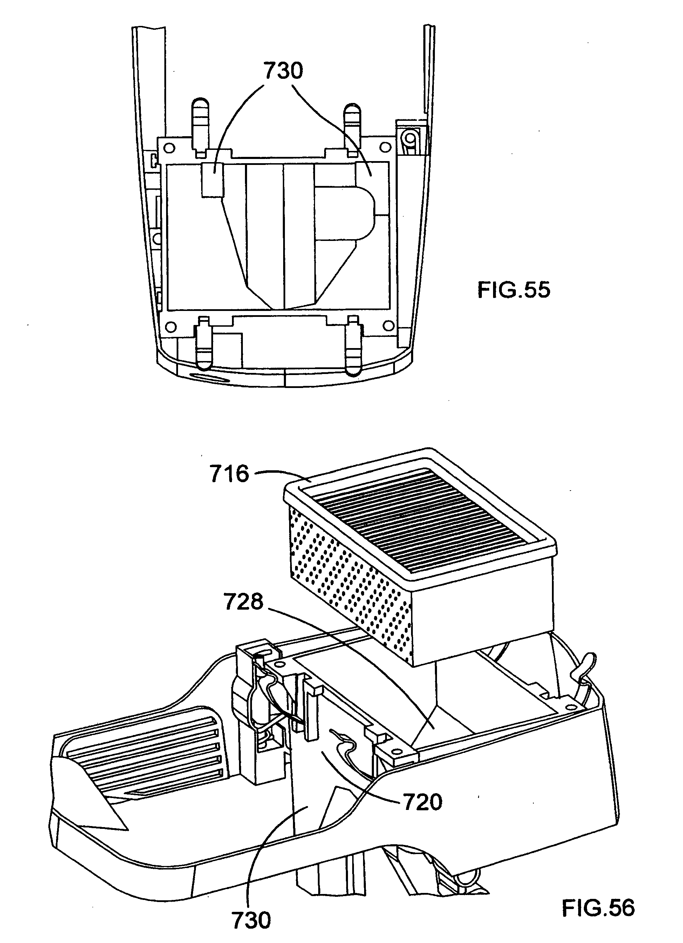

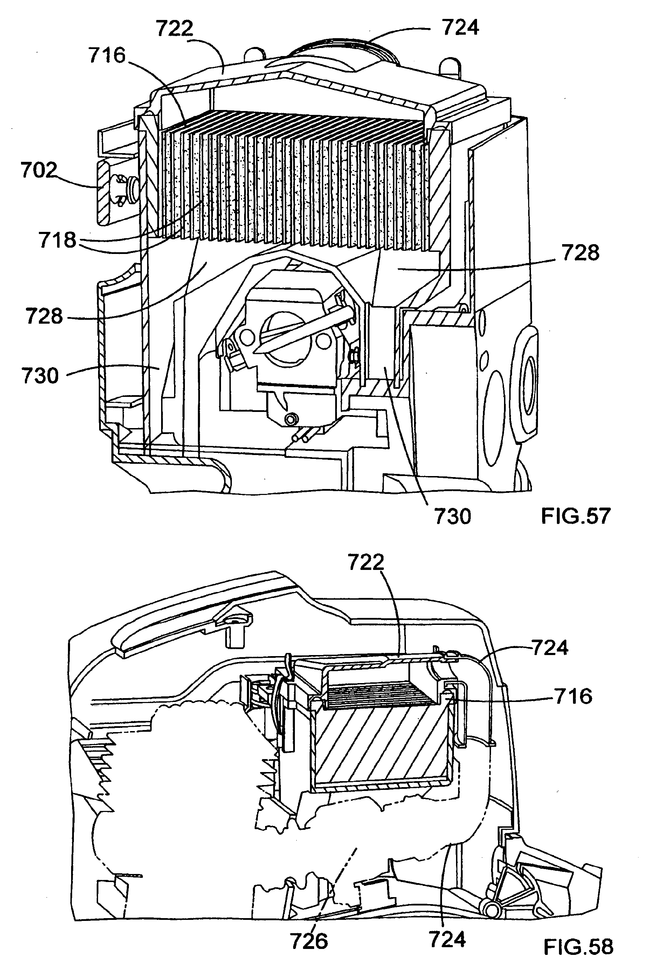

A filter cleaning mechanism of a further embodiment of the invention is shown in Figures 48 to 58. The filter cleaning mechanism 700 includes a plastic flap 702 which is pivotably mounted to the main housing 704 of the tool about a pivot axis 708, and is biased by means of a spring 710 towards the main housing 706 so that when the flap 702 is pivoted outwards and released, a rubber stop 712 on the distal end of the flap 702 strikes the filter housing 714 of the air filtration mechanism. The filter housing 714 is moveably mounted inside the main housing 706 so that the impact to the filter housing 714 caused by the flap 702 returning to the closed position under the action of the spring 710 agitates the filter 716 (Figure 56) and causes dust to fall off the downward facing pleats 718 (Figure 57) of the filter 716.

The filter housing 714 is formed from a saddle shaped housing part 720 and a cover 722, to which a flexible pipe 724 which fees clean air to the carburetor 726, is connected in a manner similar to the embodiment of Figures 33 to 47. The housing part 720 defines a filter chamber having a sloping base 728, as best seen in Figures 56 and 57, which leads to a pair of dust outlets 730, which lead to outlets (not shown) in the main housing, such that agitation of the filter 716 (either as a result of actuation of the flap 702 or as a result of vibrations caused by use of the power cutter) causes dust to fall down the dust outlets 730 out of the apertures (not shown) in the main housing 706.

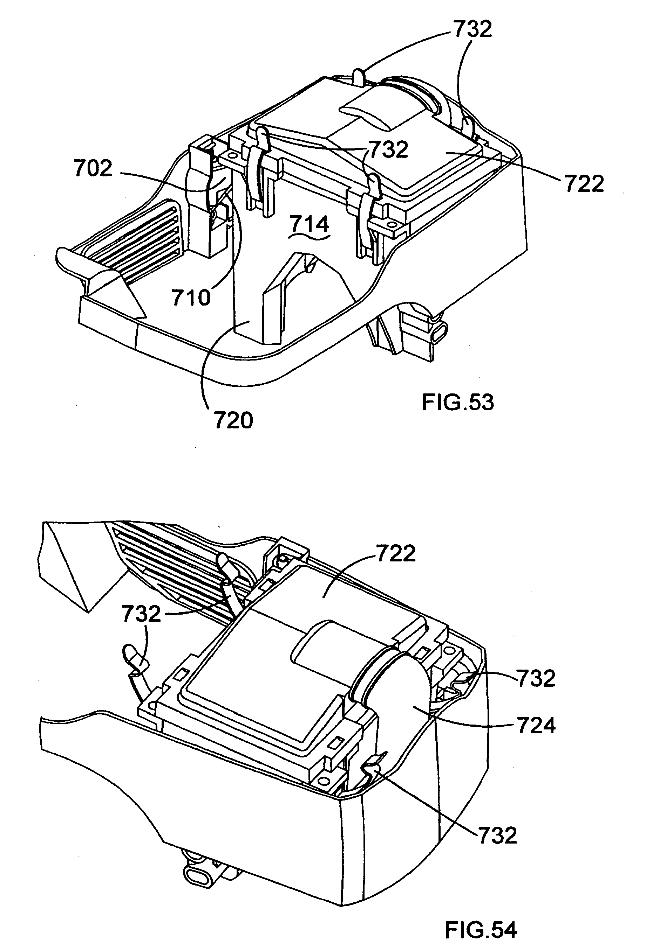

The cover 722 sealing the upper part of the filter chamber and to which the flexible tube 724 forming an inlet of the carburetor 726 is connected, is mounted to the filter housing 714 by means of two pairs of resilient fasteners 732, which can be released (as shown in Figure 54) to enable easy removal of the cover 722 for convenient cleaning or replacement of the air filter medium. By agitating the filter without directly contacting the pleats of the filter medium, this embodiment minimises wear on the pleats of the filter medium, which lengthens the useful lifetime of the filter.

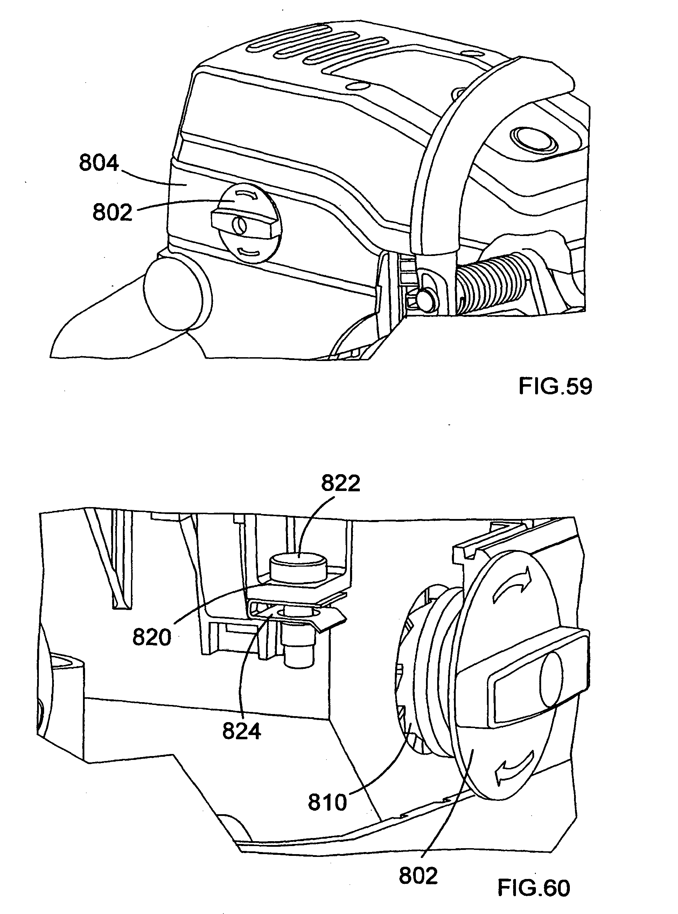

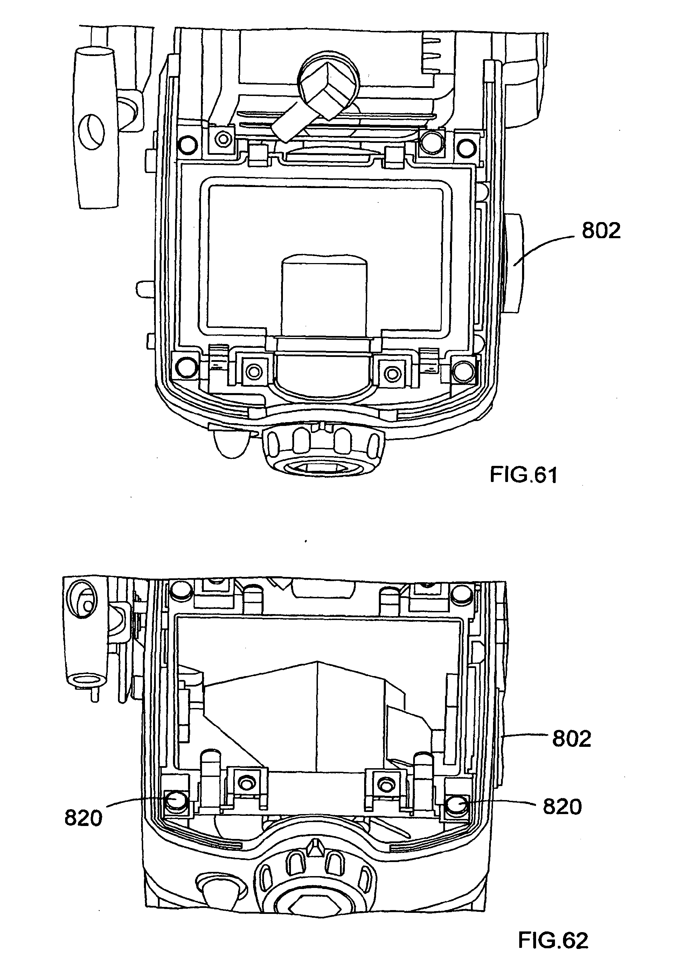

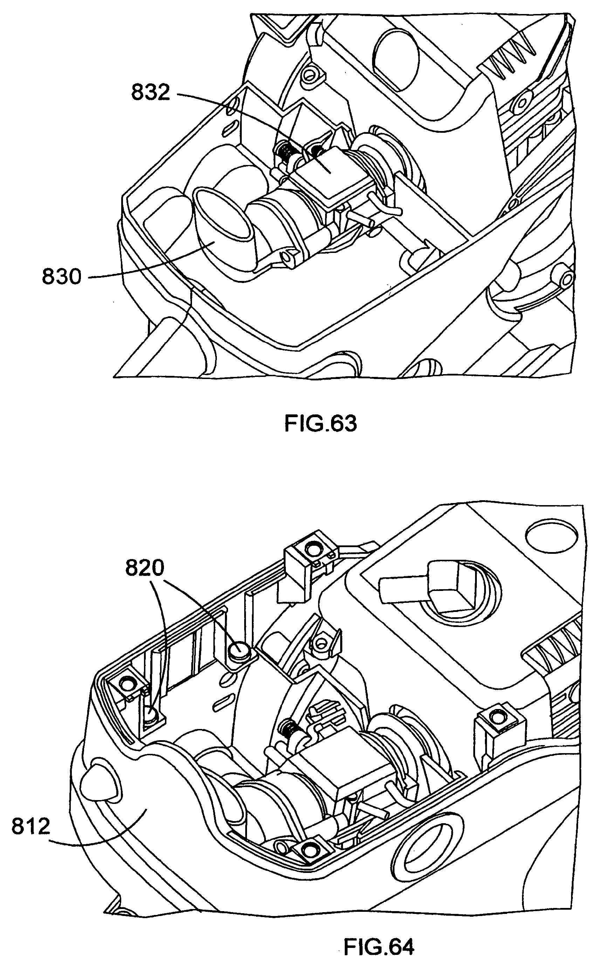

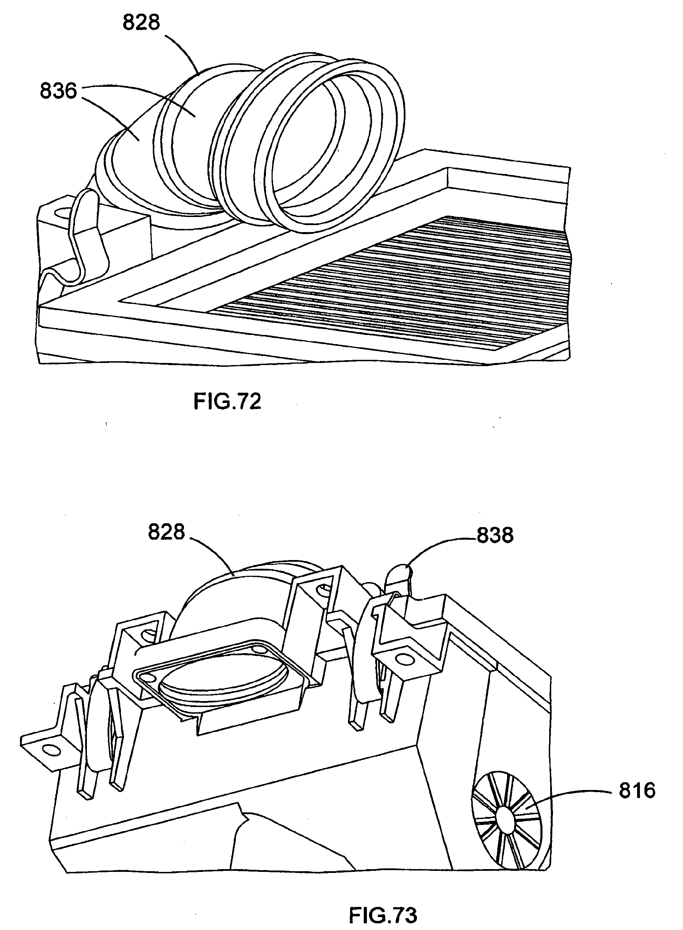

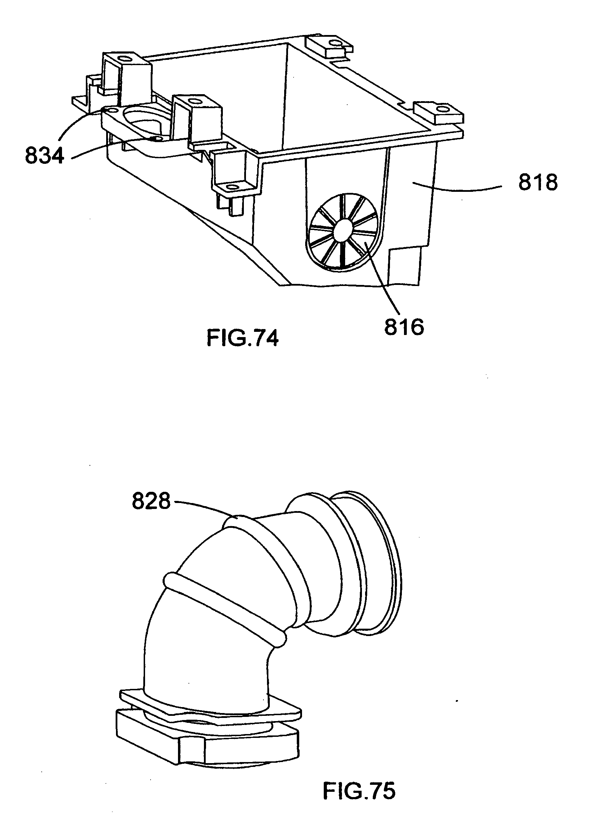

A filter cleaning mechanism of a further embodiment of the present invention is shown in Figures 59 to 75.

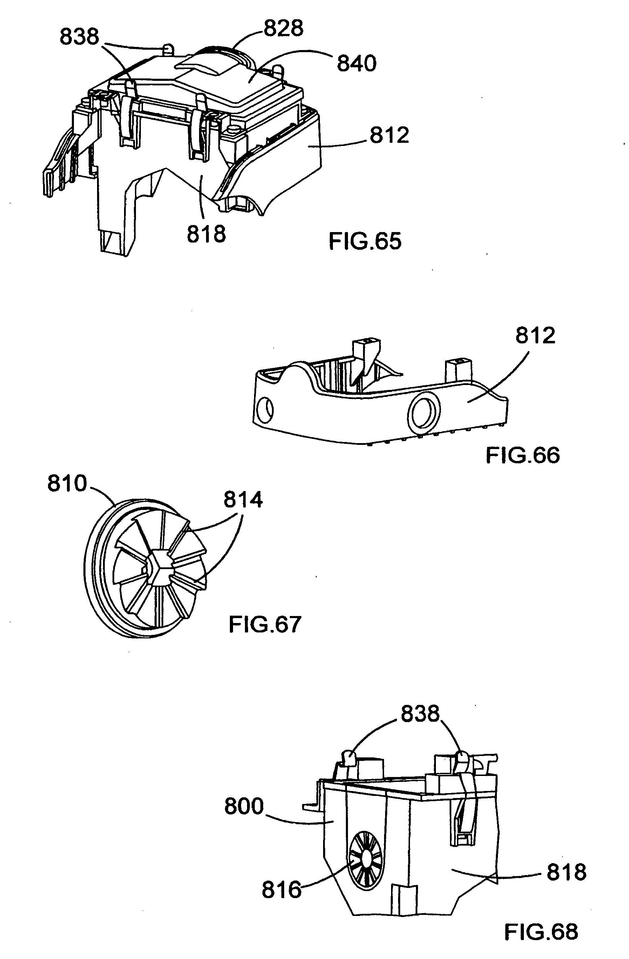

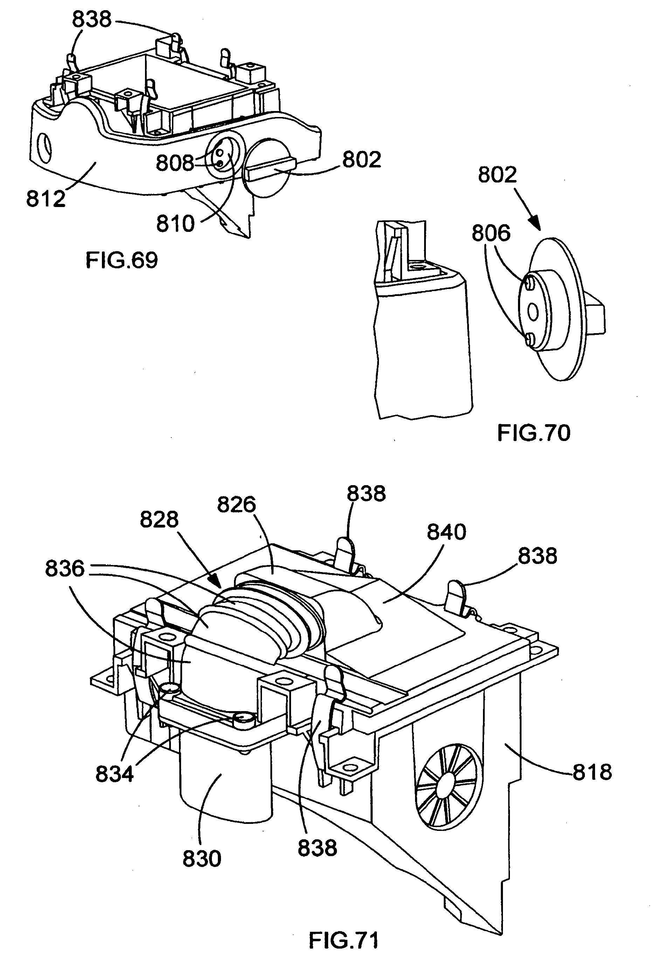

The filter cleaning mechanism 800 (Figure 68) includes a rotary actuating knob 802 (Figure 59) which is rotatably mounted to the main housing 804 of the power cutter. The actuator knob 802 is mounted by means of a pair of pins 806 (Figure 70) to a pair of holes 808 (Figure 69) in a ratchet member 810 which is rotatably mounted in a support member 812 which is fixed relative to the main housing 804 of the power cutter, in order to enable a user of the power cutter to rotate the ratchet member 810 relative to the main housing 804. The ratchet member 810 has series of ratchet teeth 814 on its surface facing away from the actuator knob 802, for engaging corresponding ratchet teeth on a ratchet plate 816 (Figure 68) forming part of the filter housing 818. The filter housing 818 is identical in construction to the filter housing 714 of the embodiment of Figures 48 to 58 and will therefore not be described in greater detail herein.

The filter housing 818 is mounted to the support member 812 by means of four spring assemblies 820, each of which, as best seen in Figure 60, comprises a pin 822 mounted to a plastic U-shaped spring member 824 to allow movement of the filter housing 818 to a limited extent relative to the main housing 804. Accordingly, as the actuator knob 802 is rotated, the ratchet member 810 is rotated while in engagement with the ratchet plate 816 on the filter housing 818, as a result of which oscillatory movement of the filter housing 818 relative to the main housing 804 occurs. This causes agitation of the filter, which causes dust to fall from the filter pleats and fall down inclined surfaces and dust outlets, in a manner similar to the embodiment of Figures 48 to 58 and to exit through apertures (not shown) in the main housing 804 of the power cutter.

Referring to Figures 71 to 75, a clean air outlet 826 of the filter housing 818 is connected via a suction pipe 828 and an inlet manifold 830 to the carburetor 832. The suction pipe 828 and the inlet manifold 830 are connected to the filter housing 818 by means of suitable screw fittings 834, and the suction pipe 828 is formed from a series of rigid sections 836 which can slide telescopically relative to each other to confer sufficient flexibility on the pipe 828 that when fasteners 838 are in the released position, the cover 840 of the filter housing 818 can be pivoted through about 90 degrees to provide easy access to the filter insider the filter housing 818 to allow easy replacement or cleaning of the filter medium.

## Claims

1. A power cutter comprising:
a housing 2;
an engine 24 mounted within the housing 2;
a support arm 7 mounted on the housing and which projects forward of the housing;
a blade mounting mechanism 70,90, 86, 92 rotatably mounted on the end of the support arm and which is capable of being rotationally driven by the engine 24 when the engine is running;
a liquid fuel aeration mechanism 126 to generate aerated fuel for the engine;
an air intake 314 for the provision of air for the liquid fuel aeration mechanism 126;
an air filtration mechanism 316 to filter the air drawn in from the air intake for the liquid fuel aeration mechanism;
a fuel tank 124 for providing fuel to the liquid fuel aeration mechanism; and
an exhaust 146 through which the exhaust gases generated by the operation of the engine are expelled;
wherein the air filtration mechanism comprises an air filter 320 comprising a plurality of pleats and wherein the air filtration mechanism further comprises an air filter cleaning mechanism.

2. A power cutter as claimed in claim 1 wherein the pleats hang substantially vertically downwardly when the power cutter is in its standard orientation.

3. A power cutter as claimed in claim 1 or 2, wherein the air filter cleaning mechanism comprises a moveable pleat stroker 328; 342; 420 located adjacent the air filter 320 and which is capable of being moved over the pleats of the air filter 320, and which, when moved over the pleats, engages with the pleats and causes the pleats to flex in order to knock dust trapped on the pleats, off the pleats.

4. A power cutter as claimed in claim 3 wherein the pleat stroker knocks dust into the space below the air filter 320.

5. A power cutter as claimed in claim 3 or 4 wherein the pleat stroker is a rubber flap 328.

6. A power cutter as claimed in any one of claims 3 to 5 wherein the pleat stroker comprises at least one first brush 342.

7. A power cutter as claimed in any one of claims 3 to 6 wherein, when the pleats are substantially straight and parallel to each other, the pleat stroker moves in a direction which is parallel to the lower edges 381 of the pleats.

8. A power cutter as claimed in any of claims 3 to 6 wherein, when the pleats are substantially straight and parallel to each other, the pleat stroker moves in a direction which is perpendicular 381 to the lower edges of the pleats.

9. A power cutter as claimed in one of claims 3 to 8 wherein the filtration mechanism further comprises a moveable frame 330; 338 upon which the pleat stroker is mounted and which also comprises a handle 334, capable of being grasped by the operator, and which, when moved by the operator, causes the movement of the pleat stroker.

10. A power cutter as claimed in claim 9 wherein the frame slides linearly within the housing 2.

11. A power cutter as claimed in either of claims 8 or 9 wherein there is further provided at least one second brush 332 mounted on the frame which sweeps up dust knocked off the pleats of the air filter in the space 322 below the air filter.

12. A power cutter as claimed in claim 11 wherein there is formed at least one first aperture 344 in the side of the housing through which at least one said second brush sweeps dust from the space 322 to the out side of the housing 2.

13. A power cutter as claimed in claim 12 wherein the handle 334 seals at least one said first aperture when the frame is in a first position.

14. A power cutter as claimed in claim 13 wherein the handle exposes at least one said first aperture 344 when moved by an operator from the first position, the movement causing at least one said second brush to sweep dust through the exposed aperture.

15. A power cutter as claimed in either of claims 13 or 14 wherein there is provided biasing means 336 to bias the frame to its first position.

16. A power cutter as claimed in claim 15, wherein the biasing means comprises at least one elastomeric rod.

17. A power cutter as claimed in claim 16, wherein a first end of at least one said elastomeric rod is adapted to slide into a slot, and a second end of the or each said rod is adapted to be mounted to said handle.

18. A power cutter as claimed in claim 17, wherein a respective first end of at least one said elastomeric rod has a different shape from the second end of said elastomeric rod.

19. A power cutter as claimed in any one of claims 9 to 18 wherein the frame comprises a tray 408 underneath the pleat stroker to catch the dust.

20. A power cutter as claimed in claim 19 wherein the tray 408 is removeable.

21. A power cutter as claimed in any one of claims 13 to 18, or any one of claims 13 to 18 and 19 or 20, further comprising a fixed frame to which said moveable frame is mounted, wherein the fixed frame comprises:
a first surface for engaging at least one said second brush;
a second surface located below the first surface when the power cutter is in its standard orientation;
at least one said first aperture; and
at least one second aperture in said first surface;
wherein movement of at least one said second brush away from said first position moves dust along said first surface towards at least one said first aperture, and movement of at least one said second brush towards said first position moves dust along said first surface towards at least one said second aperture to cause dust to fall through at least one said second aperture onto said second surface.

22. A power cutter as claimed in claim 21 wherein said second surface is inclined relative to the horizontal when the power cutter is in its standard orientation.

23. A power cutter as claimed in any one of claims 3 to 22, further comprise a track mounted to a plurality of said pleats and adapted to be engaged by said pleat stroker to knock dust off the pleats.

24. A power cutter as claimed in any one of the preceding claims wherein the liquid fuel aeration mechanism is a carburetor 126.

25. A power cutter as claimed in any one of the previous claims wherein the aerated fuel comprises petrol.

26. A power cutter as claimed in claim 25 wherein the aerated fuel further comprises lubricating oil.

27. A power cutter as claimed in any one of the previous claims wherein the air filter 320 is located above the liquid fuel aeration device 126 when the power cutter is in its standard orientation.

28. A power cutter as claimed in any one of the previous claims wherein the air filtration mechanism is arranged so that air is drawn from the air intake 314 to a space 322 below the air filter 320, and passes through the filter 320 to a space 324 above the air filter prior to being directed to the liquid fuel aeration mechanism.

29. A power cutter as claimed in any one of the previous claims wherein the pleats are substantially straight and parallel to each other.

30. A power cutter as claimed in any one of the previous claims wherein the air filtration mechanism comprises a vibration device to shake the air filter 320.

31. A power cutter as claimed in claim 30 wherein the vibration device is driven by the pulling of the starter cord of the engine.

32. A power cutter as claimed in either of claims 30 or 31 wherein the vibration device comprises an eccentric 426 or cam mechanism connected to the air filter on a first side, the air filter 320 being pivotable mounted on a second side, rotation of the eccentric causing the air filter to vibrate.

33. A power cutter as claimed in any one of claims 30 to 32, wherein the vibration device comprises an actuator member pivotably attached to said housing and biased towards said housing by second biasing means so as to cause said actuator member to strike the housing and agitate the filter.

34. A power cutter as claimed in any one of claims 30 to 33, wherein the air filter is movably mounted in the housing and the vibration device is adapted to move the air filter relative to the housing.

35. A power cutter as claimed in claim 34, wherein the vibration device comprises at least one first ratchet plate moveably mounted to the housing for engaging a respective second ratchet plate on the air filtration mechanism to cause the air filter to move relative to the housing.

36. A power cutter according to any one of the preceding claims, further comprising at least one air inlet oriented such that dust knocked off the air filter falls under gravity out of at least one said air inlet when the power cutter is in use.

37. A power cutter according to any one of the preceding claims, wherein the air filter comprises a filter housing and a cover, wherein the cover is adapted to be mounted to the filter housing by means of at least one clip to seal the cover to the filter housing.

38. A power cutter as claimed in any one of the preceding claims, wherein the liquid fuel aeration mechanism is located below the air filter when the power cutter is in its standard orientation, and is connected to an outlet of the air filter by means of at least one conduit.

## Patentansprüche

1. Trennschleifer, umfassend:
ein Gehäuse 2;
einen Motor 24, der innerhalb des Gehäuses 2 angebracht ist;
einen Stützarm 7, der an dem Gehäuse angebracht ist und der vom Gehäuse nach vorne hervorsteht;
einen Scheibenanbringungsmechanismus 70, 90, 86, 92, der drehbar am Ende des Stützarms angebracht ist und der in der Lage ist, durch den Motor 24 rotierend angetrieben zu werden, wenn der Motor läuft;
einen Flüssigtreibstoff-Belüftungsmechanismus 126 zum Erzeugen von belüftetem Treibstoff für den Motor;
einen Lufteinlass 314 zum Bereitstellen von Luft für die Flüssigtreibstoff-Belüftungsmechanismus 126;
einen Luftfiltermechanismus 316 zum Filtern der Luft, die von dem Lufteinlass für den Flüssigtreibstoff-Belüftungsmechanismus eingesogen wird;
einen Treibstofftank 124 zum Bereitstellen von Treibstoff an den Flüssigtreibstoff-Belüftungsmechanismus; und
einen Auspuff 146, durch den die Abgase, die durch den Betrieb des Motors erzeugt werden, ausgestoßen werden;
wobei der Luftfiltermechanismus ein Luftfilter 320 umfasst, das eine Vielzahl von Falten aufweist, und wobei der Luftfiltermechanismus außerdem einen Luftfilterreinigungsmechanismus aufweist.

2. Trennschleifer gemäß Anspruch 1, bei dem die Falten im Wesentlichen vertikal herabhängen, wenn sich der Trennschleifer in seiner Standardorientierung befindet.

3. Trennschleifer gemäß Anspruch 1 oder 2, bei dem der Luftfilterreinigungsmechanismus einen bewegbaren Faltenabstreifer 328; 342; 420 umfasst, der angrenzend an das Luftfilter 320 angeordnet ist und der in der Lage ist, über die Falten des Luftfilters 320 bewegt zu werden, und der, wenn er über die Falten bewegt wird, auf die Falten einwirkt und bewirkt, dass sich die Falten verbiegen, um Staub, der auf den Falten festsitzt, von den Falten abzuklopfen.

4. Trennschleifer gemäß Anspruch 3, bei dem der Faltenabstreifer Staub in den Freiraum unterhalb des Luftfilters 320 abklopft.

5. Trennschleifer gemäß Anspruch 3 oder 4, bei dem der Faltenabstreifer eine Gummilasche 328 ist.

6. Trennschleifer gemäß einem der Ansprüche 3 bis 5, bei dem der Faltenabstreifer mindestens eine erste Bürste 342 umfasst.

7. Trennschleifer gemäß einem der Ansprüche 3 bis 6, bei dem, wenn die Falten im Wesentlichen gerade und parallel zu einander sind, sich der Faltenabstreifer in eine Richtung bewegt, die parallel zu den unteren Kanten 381 der Falten ist.

8. Trennschleifer gemäß einem der Ansprüche 3 bis 6, bei dem, wenn die Falten im Wesentlichen gerade und parallel zu einander sind, der Faltenabstreifer sich in eine Richtung bewegt, die senkrecht zu den unteren Kanten 381 der Falten ist.

9. Trennschleifer gemäß einem der Ansprüche 3 bis 8, bei dem der Filtermechanismus weiterhin einen bewegbaren Rahmen 330; 338 umfasst, an dem der Faltenabstreifer angebracht ist und der außerdem einen Griff 334 umfasst, der in der Lage ist, durch den Benutzer ergriffen zu werden, und der, wenn er durch den Benutzer bewegt wird, die Bewegung des Faltenabstreifers bewirkt.

10. Trennschleifer gemäß Anspruch 9, bei dem der Rahmen linear innerhalb des Gehäuses 2 gleitet.

11. Trennschleifer gemäß einem der Ansprüche 8 oder 9, bei dem außerdem mindestens eine zweite Bürste 332 bereitgestellt ist, die an dem Rahmen angebracht ist und die Staub, der von den Falten des Luftfilters abgeklopft wurde, in dem Freiraum 332 unterhalb des Luftfilters auffegt.

12. Trennschleifer gemäß Anspruch 11, bei dem mindestens eine erste Öffnung 344 in der Seite des Gehäuses ausgebildet ist, durch die mindestens eine der zweiten Bürsten Staub aus dem Freiraum 322 zur Außenseite des Gehäuses 2 fegt.

13. Trennschleifer gemäß Anspruch 12, bei dem der Griff 334 mindestens eine der ersten Öffnungen verschließt, wenn der Rahmen sich in einer ersten Stellung befindet.

14. Trennschleifer gemäß Anspruch 13, bei dem der Griff mindestens eine der ersten Öffnungen 344 freilegt, wenn er von einem Benutzer aus der ersten Stellung bewegt wird, wobei die Bewegung bewirkt, dass mindestens eine der zweiten Bürsten Staub durch die freigelegte Öffnung fegt.

15. Trennschleifer gemäß einem der Ansprüche 13 oder 14, bei dem Vorspannmittel 336 bereitgestellt sind, um den Rahmen in seine erste Stellung vorzuspannen.

16. Trennschleifer gemäß Anspruch 15, bei dem das Vorspannmittel mindestens einen elastomeren Stab umfasst.

17. Trennschleifer gemäß Anspruch 16, bei dem ein erstes Ende mindestens eines der elastomeren Stäbe dafür eingerichtet ist, in einer Nut zu gleiten, und ein zweites Ende des Stabs oder jedes der Stäbe dafür eingerichtet ist, an dem Griff angebracht zu werden.

18. Trennschleifer gemäß Anspruch 17, bei dem ein jeweiliges erstes Ende mindestens eines der elastomeren Stäbe eine andere Form aufweist, als das zweite Ende des elastomeren Stabs.

19. Trennschleifer gemäß einem der Ansprüche 9 bis 18, bei dem der Rahmen eine Wanne 408 unterhalb des Faltenabstreifers umfasst, um den Staub aufzufangen.

20. Trennschleifer gemäß Anspruch 19, bei dem die Wanne 408 entfernbar ist.

21. Trennschleifer gemäß einem der Ansprüche 13 bis 18 oder gemäß einem der Ansprüche 13 bis 18 und 19 oder 20, der außerdem einen festen Rahmen aufweist, an dem der bewegbare Rahmen angebracht ist, wobei der feste Rahmen umfasst:
eine erste Oberfläche zum Einwirken auf mindestens eine der zweiten Bürsten;
eine zweite Oberfläche, die unterhalb der ersten Oberfläche angeordnet ist, wenn sich der Trennschleifer in seiner Standardorientierung befindet;
mindestens eine der ersten Öffnungen; und
mindestens eine der zweiten Öffnungen in der ersten Oberfläche;
wobei ein Bewegen von mindestens einer der zweiten Bürsten weg von der ersten Stellung Staub entlang der ersten Oberfläche hin zu mindestens einer der ersten Öffnungen bewegt, und ein Bewegen von mindestens einer der zweiten Bürsten zur ersten Stellung hin Staub entlang der ersten Oberfläche hin zu mindestens einer der zweiten Öffnungen bewegt, um zu bewirken, dass Staub durch mindestens eine der zweiten Öffnungen auf die zweite Oberfläche fällt.

22. Trennschleifer gemäß Anspruch 21, bei dem die zweite Oberfläche relativ zur Horizontalen geneigt ist, wenn sich der Trennschleifer in seiner Standardorientierung befindet.

23. Trennschleifer gemäß einem der Ansprüche 3 bis 22, der außerdem eine Spur, die an einer Vielzahl der Falten angebracht ist, umfasst, und dafür eingerichtet ist, dass der Faltenabstreifer auf sie einwirkt, um Staub von den Falten abzuklopfen.

24. Trennschleifer gemäß einem der vorhergehenden Ansprüche, bei dem der Flüssigtreibstoff-Belüftungsmechanismus ein Vergaser 126 ist.

25. Trennschleifer gemäß einem der vorhergehenden Ansprüche, bei dem der belüftete Treibstoff Benzin umfasst.

26. Trennschleifer gemäß Anspruch 25, bei dem der belüftete Treibstoff außerdem Schmieröl umfasst.

27. Trennschleifer gemäß einem der vorhergehenden Ansprüche, bei dem das Luftfilter 320 oberhalb der Flüssigtreibstoff-Belüftungseinrichtung 126 angeordnet ist, wenn sich der Trennschleifer in seiner Standardorientierung befindet.

28. Trennschleifer gemäß einem der vorhergehenden Ansprüche, bei dem der Luftfiltermechanismus so angeordnet ist, dass Luft von dem Lufteinlass 314 in einen Freiraum 322 unter dem Luftfilter 320 eingesogen wird und durch das Filter 320 in einen Freiraum 324 über dem Luftfilter hindurchströmt, bevor sie zum Flüssigtreibstoff-Belüftungsmechanismus gelenkt wird.

29. Trennschleifer gemäß einem der vorhergehenden Ansprüche, bei dem die Falten im Wesentlichen gerade und parallel zueinander sind.

30. Trennschleifer gemäß einem der vorhergehenden Ansprüche, bei dem der Luftfiltermechanismus eine Vibrationseinrichtung aufweist, um das Luftfilter 320 zu schütteln.

31. Trennschleifer gemäß Anspruch 30, bei dem die Vibrationseinrichtung durch Ziehen der Starterkordel des Motors angetrieben wird.

32. Trennschleifer gemäß einem der Ansprüche 30 oder 31, bei dem die Vibrationseinrichtung einen Exzenter 426 oder einen Steg-Mechanismus umfasst, der mit dem Luftfilter auf einer ersten Seite verbunden ist, wobei das Luftfilter 320 schwenkbar auf einer zweiten Seite angebracht ist und eine Rotation des Exzenters bewirkt, dass das Luftfilter vibriert.

33. Trennschleifer gemäß einem der Ansprüche 30 bis 32, bei dem die Vibrationseinrichtung ein Betätigungsglied umfasst, das schwenkbar an dem Gehäuse befestigt ist und zum Gehäuse hin mittels zweiter Vorspannmittel vorgespannt ist, um zu bewirken, dass das Betätigungsglied gegen das Gehäuse schlägt und das Filter erschüttert.

34. Trennschleifer gemäß einem der Ansprüche 30 bis 33, bei dem das Luftfilter bewegbar in dem Gehäuse angebracht ist und die Vibrationseinrichtung dafür eingerichtet ist, das Luftfilter relativ zum Gehäuse zu bewegen.

35. Trennschleifer gemäß Anspruch 34, bei dem die Vibrationseinrichtung mindestens eine erste Sperrklinkenplatte umfasst, die bewegbar an dem Gehäuse angebracht ist, um auf eine entsprechende zweite Sperrklinkenplatte auf dem Luftfiltermechanismus einzuwirken, um zu bewirken, dass sich das Luftfilter relativ zum Gehäuse bewegt.

36. Trennschleifer gemäß einem der vorhergehenden Ansprüche, der außerdem mindestens einen Lufteinlass umfasst, der so orientiert ist, dass Staub, der von dem Luftfilter abgeklopft wird, unter Wirkung der Schwerkraft aus mindestens einem der Lufteinlässe herausfällt, wenn der Trennschleifer in Betrieb ist.

37. Trennschleifer gemäß einem der vorhergehenden Ansprüche, bei dem das Luftfilter ein Filtergehäuse und eine Abdeckung aufweist, wobei die Abdeckung dafür eingerichtet ist, an dem Filtergehäuse mittels mindestens einer Klemme angebracht zu werden, um die Abdeckung an dem Filtergehäuse zu befestigen.

38. Trennschleifer gemäß einem der vorhergehenden Ansprüche, bei dem der Flüssigtreibstoff-Belüftungsmechanismus unterhalb des Luftfilters angeordnet ist, wenn sich der Trennschleifer in seiner Standardorientierung befindet, und mit einem Auslass des Luftfilters mittels mindestens eines Kanals verbunden ist.

## Revendications

1. Une découpeuse comprenant :
un boîtier 2 ;
un moteur 24 monté à l'intérieur du boîtier 2 ;
un bras support 7 monté sur le boîtier et qui est en saillie à l'avant du boîtier ;
un mécanisme support de lame 70, 90, 86, 92 monté rotatif à l'extrémité du bras support et qui est capable d'être entraîné en rotation par le moteur 24 lorsque le moteur est en marche ;
un mécanisme 126 d'aération de carburant liquide pour généré un carburant aéré pour le moteur ;
une prise d'air 314 pour la fourniture d'air pour le mécanisme 126 d'aération de carburant liquide ;
un mécanisme de filtration d'air 316 pour filtrer l'air aspiré de la prise d'air pour le mécanisme d'aération de carburant liquide ;
un réservoir de carburant 124 pour fournir du carburant au mécanisme d'aération de carburant liquide ; et
un échappement 146 à travers lequel les gaz d'échappement générés par l'utilisation du moteur sont rejetés ;
dans laquelle le mécanisme de filtration d'air comprend un filtre à air 320 comprenant une pluralité de plis et dans laquelle le mécanisme de filtration d'air comprend en outre un mécanisme de nettoyage du filtre à air.

2. Une découpeuse telle que revendiquée dans la revendication 1 dans laquelle les plis pendent substantiellement verticalement vers le bas quand la découpeuse est dans son orientation standard.

3. Une découpeuse telle que revendiquée dans la revendication 1 ou 2, dans laquelle le mécanisme de nettoyage du filtre à air comprend une tapette à plis mobile 328 ; 342 ; 420 localisée de façon adjacente au filtre à air 320 et qui est capable d'être déplacée sur les plis du filtre à air 320, et qui, lorsqu'elle est déplacée sur les plis, s'engage dans les plis et entraîne les plis à se plier afin de décrocher la poussière piégée dans les plis, hors des plis.

4. Une découpeuse telle que revendiquée dans la revendication 3 dans laquelle la tapette à plis décroche la poussière dans l'espace sous le filtre à air 320.

5. Une découpeuse telle que revendiquée dans la revendication 3 ou 4 dans laquelle la tapette à plis est une languette de caoutchouc 328.

6. Une découpeuse telle que revendiquée dans l'une quelconque des revendications 3 à 5, dans laquelle la tapette à plis comprend au moins une première brosse 342.

7. Une découpeuse telle que revendiquée dans l'une quelconque des revendications 3 à 6 dans laquelle, quand les plis sont substantiellement droits et parallèles les uns aux autres, la tapette à plis se déplace dans une direction qui est parallèle aux bords inférieurs 381 des plis.

8. Une découpeuse telle que revendiquée dans l'une quelconque des revendications 3 à 6 dans laquelle, quand les plis sont substantiellement droits et parallèles les uns aux autres, la tapette à plis se déplace dans une direction qui est perpendiculaire aux bords inférieurs 381 des plis.

9. Une découpeuse telle que revendiquée dans l'une quelconque des revendications 3 à 8 dans laquelle le mécanisme de filtration comprend en outre un cadre mobile 330 ; 338 sur lequel la tapette à plis est montée et qui comprend aussi une poignée 334, capable d'être saisie par l'opérateur, et qui, lorsque déplacée par l'opérateur, provoque le mouvement de la tapette à plis.

10. Une découpeuse telle que revendiquée dans la revendication 9 dans laquelle le cadre coulisse linéairement à l'intérieur du boîtier 2.

11. Une découpeuse telle que revendiquée dans l'une ou l'autre des revendications 8 ou 9 dans laquelle il est prévu en outre au moins une seconde brosse 332 montée sur le cadre qui balaie la poussière décrochée des plis du filtre à air dans l'espace 322 sous le filtre à air.

12. Une découpeuse telle que revendiquée dans la revendication 11 dans laquelle il est formé au moins une première ouverture 344 dans le côté du boîtier à travers laquelle au moins une seconde brosse balaie la poussière de l'espace 322 vers le coté externe du boîtier 2.

13. Une découpeuse telle que revendiquée dans la revendication 12 dans laquelle la poignée 334 rebouche ladite au moins une première ouverture quand le cadre est dans une première position.

14. Une découpeuse telle que revendiquée dans la revendication 13 dans laquelle la poignée dévoile ladite au moins une première ouverture 344 quand déplacée par un opérateur d'une première position, le mouvement entraînant ladite au moins une seconde brosse à balayer la poussière à travers l'ouverture dévoilée.

15. Une découpeuse telle que revendiquée dans l'une ou l'autre des revendications 13 ou 14 dans laquelle il est prévu des moyens de rappel 336 pour rappeler le cadre dans sa première position.

16. Une découpeuse telle que revendiquée dans la revendication 15, dans laquelle les moyens de rappel comprennent au moins une tige élastomère.

17. Une découpeuse telle que revendiquée dans la revendication 16, dans laquelle une première extrémité de ladite au moins une tige élastomère est adaptée pour coulisser dans une encoche, et une seconde extrémité de ladite au moins une tige élastomère est adaptée pour être montée sur ladite poignée.

18. Une découpeuse telle que revendiquée dans la revendication 17, dans laquelle une première extrémité respective de ladite au moins une tige élastomère a une forme différente de la seconde extrémité de ladite tige élastomère.

19. Une découpeuse telle que revendiquée dans l'une quelconque des revendications 9 à 18 dans laquelle le cadre comprend un réceptacle 408 en dessous de la tapette à plis pour attraper la poussière.

20. Une découpeuse telle que revendiquée dans la revendication 19 dans laquelle le réceptacle 408 est amovible.

21. Une découpeuse telle que revendiquée dans l'une quelconque des revendications 13 à 18, ou l'une quelconque des revendications 13 à 18 et 19 ou 20, comprenant en outre un cadre fixe sur lequel ledit cadre mobile est monté, dans laquelle le cadre fixe comprend :
une première surface pour coopérer avec ladite au moins une seconde brosse ;
une seconde surface située sous la première surface quand la découpeuse est dans son orientation standard ;
ladite au moins une première ouverture ; et
au moins une seconde ouverture dans ladite première surface ;
dans laquelle un mouvement d'éloignement de ladite au moins une seconde brosse de ladite première position déplace la poussière le long de ladite première surface vers ladite au moins une première ouverture, et un mouvement de ladite au moins une seconde brosse vers ladite première position déplace la poussière le long de ladite première surface vers ladite au moins une seconde ouverture pour provoquer la poussière à tomber à travers ladite au moins une seconde ouverture sur ladite seconde surface.

22. Une découpeuse telle que revendiquée dans la revendication 21 dans laquelle ladite seconde surface est inclinée par rapport à l'horizontale quand la découpeuse est dans son orientation standard.

23. Une découpeuse telle que revendiquée dans l'une quelconque des revendications 3 à 22 comprend en outre un chemin monté sur une pluralité desdits plis et adapté pour coopérer avec ladite tapette à plis pour décrocher la poussière des plis.

24. Une découpeuse telle que revendiquée dans l'une quelconque des revendications précédentes dans laquelle le mécanisme d'aération de carburant liquide est un carburateur 126.

25. Une découpeuse telle que revendiquée dans l'une quelconque des revendications précédentes dans laquelle le carburant aéré comprend du pétrole.

26. Une découpeuse telle que revendiquée dans la revendication 25 dans laquelle le carburant aéré comprend en outre de l'huile de lubrification.

27. Une découpeuse telle que revendiquée dans l'une quelconque des revendications précédentes dans laquelle le filtre à air 320 est localisé au dessus du dispositif 126 d'aération du carburant liquide quand la découpeuse est dans son orientation standard.

28. Une découpeuse telle que revendiquée dans l'une quelconque des revendications précédentes dans laquelle le mécanisme de filtration d'air est agencé de façon à ce que de l'air soit aspiré de la prise d'air 314 vers un espace 322 sous le filtre à air 320 et passe à travers le filtre 320 vers un espace 324 au dessus du filtre à air avant d'être dirigé vers le mécanisme d'aération de carburant liquide.

29. Une découpeuse telle que revendiquée dans l'une quelconque des revendications précédentes dans laquelle les plis sont substantiellement droits et parallèles les uns aux autres.

30. Une découpeuse telle que revendiquée dans l'une quelconque des revendications précédentes dans laquelle le mécanisme de filtration d'air comprend un dispositif à vibrations pour secouer le filtre à air 320.

31. Une découpeuse telle que revendiquée dans la revendication 30 dans laquelle le dispositif à vibrations est commandé par la traction de la corde du démarreur du moteur.

32. Une découpeuse telle que revendiquée dans l'une ou l'autre des revendications 30 ou 31 dans laquelle le dispositif à vibrations comprend un excentrique 426 ou un mécanisme à came connecté au filtre à air d'un premier côté, le filtre à air 320 étant monté pivotant sur un second côté, la rotation de l'excentrique entraînant le filtre à air à vibrer.

33. Une découpeuse telle que revendiquée dans l'une quelconque des revendications 30 à 32, dans laquelle le dispositif à vibrations comprend un élément activateur attaché à pivotement audit boîtier et rappelé vers ledit boîtier par des seconds moyens de rappel de manière à provoquer ledit élément activateur à frapper le boîtier et agiter le filtre.

34. Une découpeuse telle que revendiquée dans l'une quelconque des revendications 30 à 33, dans laquelle le filtre à air est monté de façon mobile dans le boîtier et le dispositif à vibrations est adapté pour déplacer le filtre à air par rapport au boîtier.

35. Une découpeuse telle que revendiquée dans la revendication 34, dans laquelle le dispositif à vibrations comprend au moins une première plaque à rochet montée de façon mobile sur le boîtier pour coopérer avec une seconde plaque à rochet respective sur le mécanisme de filtration d'air pour entraîner le filtre à air à se déplacer par rapport au boîtier.

36. Une découpeuse selon l'une quelconque des revendications précédentes, comprenant en outre au moins une entrée d'air orientée de manière à ce que la poussière décrochée du filtre à air tombe par gravité à l'extérieur d'au moins une entrée d'air quand la découpeuse est utilisée.

37. Une découpeuse selon l'une quelconque des revendications précédentes, dans laquelle le filtre à air comprend un boîtier de filtre et un couvercle, dans laquelle le couvercle est adapté pour être monté sur le boîtier de filtre au moyen d'au moins un clip pour refermer le couvercle sur le boîtier de filtre.

38. Une découpeuse telle que revendiquée dans l'une quelconque des revendications précédentes, dans laquelle le mécanisme d'aération de carburant liquide est situé sous le filtre à air quand la découpeuse est dans son orientation standard, et est connecté à une sortie du filtre à air au moyen d'au moins un conduit.
